# EUROPEAN PATENT APPLICATION

(11) **EP 4 535 759 A1**
(43) Date of publication of application: **09.04.2025**
(21) Application number: 23829451.6
(22) Date of filing: 28.02.2023
(51) Int. Cl.: H04L 67/1031

(54) **DISTRIBUTED TRAINING METHOD, SYSTEM, AND DEVICE**

(30) Priority: 29.06.2022 CN 202210756779
(71) Applicant: Huawei Cloud Computing Technologies Co., Ltd., Guiyang, Guizhou 550025 (CN)
(72) Inventor: ZHENG, Xiaoyu, Guiyang, Guizhou 550025 (CN); PANG, Xibao, Guiyang, Guizhou 550025 (CN); LIAN, Yunwen, Guiyang, Guizhou 550025 (CN); LI, Yi, Guiyang, Guizhou 550025 (CN); DAI, Zonghong, Guiyang, Guizhou 550025 (CN)
(74) Representative: Maiwald GmbH
(86) International application number: PCT/CN2023/078777
(87) International publication number: WO 2024/001259

(57) **Abstract**

A distributed training method, system, and apparatus are provided, to resolve a problem in the conventional technology that data transmission is slow due to transmission link congestion of a switch. The method includes: A management node obtains a network topology, where the network topology includes a connection relationship between a core switch and a computing node in a computing cluster. Then, the management node determines a communication plan between N computing nodes based on the network topology, where the N computing nodes are computing nodes that are in the computing cluster and that are configured to train a target model in a distributed manner; the communication plan includes multiple inter-group paths, and for each of the multiple inter-group paths: the inter-group path includes two computing nodes that are in the N computing nodes and that belong to different groups, and a core switch configured to connect the two computing nodes, and the inter-group path is used to transmit data between the two computing nodes on the inter-group path; an amount of data transmitted on each of the multiple inter-group paths meets a preset condition; and both M and N are integers greater than 2.

## Description

### CROSS-REFERENCE TO RELATED APPLICATIONS

This application claims priority to Chinese Patent Application No. 202210756779.4, filed with the China National Intellectual Property Administration on June 29, 2022 and entitled "DISTRIBUTED TRAINING METHOD, SYSTEM, AND APPARATUS", which is incorporated herein by reference in its entirety.

### TECHNICAL FIELD

This application relates to the field of computing technologies, and in particular, to a distributed training method, system, and apparatus.

### BACKGROUND

Deep learning (deep learning) is machine learning technologies based on a deep neural network algorithm. Deep learning is mainly applied to scenarios such as perception and decision-making in the artificial intelligence (artificial intelligence, AI) field, for example, image and speech recognition, natural language translation, and computer games.

Distributed training means that multiple computing nodes (workers) jointly train a same model. Any two computing nodes (that is, a pair of computing nodes) may be connected by using switches at multiple layers, so that the two computing nodes transmit intermediate data (for example, a weight gradient) to each other. When a switch at a layer is to transmit data to a switch at an upper layer, the switch may select one switch from multiple switches at the upper layer based on a load balancing principle, and transmit the data to the selected switch at the upper layer. However, if the switch at the upper layer receives data from multiple switches at a lower layer, transmission link congestion may occur on the switch at the upper layer. Consequently, data transmission is slow.

### SUMMARY

This application provides a distributed training method, system, and apparatus, to improve a data transmission speed.

According to a first aspect, this application provides a distributed training method, applicable to a distributed training system including a computing cluster and a core switch. The method is performed by a management node.

The management node is an external node independent of the computing cluster. The external node is separately connected to multiple computing nodes in the computing cluster, to manage the computing nodes in the computing cluster. **In** a specific implementation, the management node is, for example, a computer, or a module in the computer, for example, a plug-in.

Alternatively, the management node is a computing node in the computing cluster, and the computing node is separately connected to multiple other computing nodes in the computing cluster. The computing node not only has a capability of managing the multiple other computing nodes in the computing cluster, but also has a computing capability of another computing node. In a specific implementation, the management node is, for example, a physical server. The physical server includes one or more computing units (or referred to as processing units). The computing unit is, for example, a graphics processing unit (graphics processing unit, GPU), a central processing unit (central processing unit, CPU), or a neural network accelerator (neural network processing unit, NPU).

Alternatively, the management node includes multiple functional modules, some of the multiple functional modules are deployed on the computing node in the computing cluster, and other remaining functional modules are deployed on an external node independent of the computing cluster.

The distributed training method includes: The management node obtains a network topology, where the network topology includes a connection relationship between the core switch and the computing node in the computing cluster. Further, the computing cluster includes M groups, and each group includes one or more computing nodes. Then, the management node determines a communication plan between N computing nodes based on the network topology. The N computing nodes are computing nodes that are in the computing cluster and that are configured to train a target model in a distributed manner. The communication plan includes multiple inter-group paths. For each of the multiple inter-group paths: the inter-group path includes two computing nodes that are in the N computing nodes and that belong to different groups, and a core switch configured to connect the two computing nodes, and the inter-group path is used to transmit data between the two computing nodes on the inter-group path. An amount of data transmitted on each of the multiple inter-group paths meets a preset condition. Both M and N are integers greater than 2.

In the foregoing technical solution, the management node determines the communication plan between the N computing nodes in a data aggregation process of distributed training based on the network topology, so that the amount of the data transmitted on each of the multiple inter-group paths included in the communication plan meets the preset condition, to avoid a problem that transmission link congestion of the core switch is caused because a core switch needs to transmit a large amount of data in an inter-group transmission manner when the N computing nodes perform data aggregation. This helps improve a data transmission speed, and further improve a distributed training speed.

In a possible implementation, that the management node determines a communication plan between N computing nodes based on the network topology is specifically: The management node determines the communication plan between the N computing nodes based on the network topology and a communication algorithm, where the communication algorithm is used to aggregate, in the distributed training, data obtained by separately performing training by the N computing nodes, to obtain the target model. The communication algorithm is, for example, a ring (ring) algorithm, a halving-doubling (half-doubling, HD) algorithm, or a binary tree (binary tree) algorithm.

In the foregoing technical solution, the management node determines the communication plan between the N computing nodes based on principles of different communication algorithms and with reference to the network topology. This helps the N computing nodes perform distributed training more efficiently.

In a possible implementation, each of multiple core switches included in the multiple inter-group paths includes one or more traffic ports. That an amount of data transmitted on each of the multiple inter-group paths meets a preset condition includes: A difference between traffic of any two of multiple traffic ports included in the multiple inter-group paths is less than a threshold, where traffic of a traffic port is associated with a data amount of data transmitted between two computing nodes on an inter-group path to which the traffic port belongs. In a possible implementation, when each inter-group path includes multiple levels of core switches, core switches to which any two traffic ports whose difference is less than the threshold belong to a same level.

In the foregoing technical solution, the communication plan determined by the management node is used to implement load balancing of traffic of the traffic ports of the multiple core switches through which the multiple inter-group paths pass, to avoid severe traffic congestion of a core switch during data transmission, and ensure that data transmitted on the inter-group paths in entire distributed training is balanced.

In a possible implementation, for any two of the multiple inter-group paths: The two inter-group paths include different core switches, or the two inter-group paths include a same core switch, and traffic ports of the core switch on the two inter-group paths are different. In this way, the traffic ports through which the multiple inter-group paths pass do not overlap, to avoid a case in which a traffic port of a core switch needs to transmit data on multiple inter-group paths, so as to avoid congestion of the traffic port, and help improve the data transmission speed.

In a possible implementation, the network topology includes a connection relationship between the core switch, the computing cluster, and an access switch. For each of the multiple inter-group paths: The inter-group path further includes two access switches respectively corresponding to the two computing nodes, and each computing node on the inter-group path is connected to the core switch by using the access switch corresponding to the computing node. As described above, an implementation in which the computing node is connected to the core switch is provided.

In a possible implementation, the communication plan further includes multiple intra-group paths, each intra-group path includes two computing nodes that are in the N computing nodes and that belong to a same group, and an access switch corresponding to the group, and the intra-group path is used to transmit data between the two computing nodes on the intra-group path. In a possible implementation, a data amount of the data transmitted between the two computing nodes on the intra-group path is greater than the data amount of the data transmitted between the two computing nodes on the inter-group path.

In the foregoing technical solution, the communication plan determined by the management node includes not only the multiple inter-group paths but also the multiple intra-group paths, and data transmission performance of the intra-group path is better than data transmission performance of the inter-group path. In this way, the management node may plan the inter-group path to transmit a small amount of data, and plan the intra-group path to transmit a large amount of data, to implement efficient data transmission, avoid congestion of a core switch port on the inter-group path, and improve the distributed training speed.

In a possible implementation, the M groups respectively correspond to M access switches. For each of the M access switches: The access switch includes K first ports and K second ports respectively corresponding to the K first ports; the K first ports are respectively connected to K core switches; the K second ports are respectively connected to K ports of a computing node in a group corresponding to the access switch; and K is an integer greater than 2.

In this way, the access switch can not only connect any core switch to any computing node in a group corresponding to the access switch, but also connect any two computing nodes in the group corresponding to the access switch, so that any two computing nodes in an entire computing cluster can be connected to each other, and the target model can be trained in the distributed manner.

In a possible implementation, that the management node determines a communication plan between N computing nodes based on the network topology is specifically: The management node obtains a training task, where the training task includes a total quantity N of computing nodes and the communication algorithm. Then, the management node determines the N computing nodes and the communication plan between the N computing nodes from multiple computing nodes in an idle state in the computing cluster based on the network topology, the total quantity N of computing nodes, and the communication algorithm. In the foregoing technical solution, a user delivers the training task to the management node, and the training task includes parameters needed by the user, that is, the total quantity N of computing nodes and the communication algorithm. In this way, a requirement of the user for the distributed training can be better met.

In a possible implementation, that the management node determines the N computing nodes and the communication plan between the N computing nodes from multiple computing nodes in an idle state in the computing cluster based on the network topology, the total quantity N of computing nodes, and the communication algorithm is specifically: The management node determines the N computing nodes from the multiple computing nodes in the idle state in the computing cluster based on the network topology and the total quantity N of computing nodes. The management node pairs two computing nodes that are in the N computing nodes and that belong to a same group, and when multiple unpaired computing nodes are left, the management node pairs the multiple unpaired computing nodes, to obtain N/2 node pairs. The management node determines a communication plan between the N computing nodes in each of multiple rounds of communication based on the multiple rounds of communication of the communication algorithm and the N/2 node pairs, where for a communication plan in any round of communication, a larger amount of data transmitted between two computing nodes in the communication plan indicates a smaller quantity of inter-group paths included in the communication plan. If it is determined that in an i^{th} round of communication in the multiple rounds of communication, the communication plan between the N computing nodes includes multiple inter-group paths, and an amount of data transmitted on each of the multiple inter-group paths does not meet the preset condition, the management node adjusts the communication plan between the N computing nodes in the i^{th} round of communication, where i is a positive integer.

In the foregoing technical solution, the management node first selects the N computing nodes from the computing cluster, and then performs communication planning on the N computing nodes. This helps reduce a computation amount in a communication planning process. Further, the management node first pairs the N computing nodes, and then determines the communication plan between the N computing nodes in each round of communication based on multiple paired node pairs and the multiple rounds of communication of the communication algorithm. This helps implement that an amount of data transmitted on each of the multiple inter-group paths in each round of communication meets the preset condition, and further improve data transmission efficiency in each round of communication.

In a possible implementation, the multiple inter-group paths include a first inter-group path, and the first inter-group path includes a first computing node, a second computing node, and a first core switch. After determining the communication plan between the N computing nodes, the management node further separately sends first information to the first computing node and the second computing node according to the communication plan, where the first information indicates that the first inter-group path is used by the first computing node to send first data to the second computing node. Correspondingly, the first computing node and the second computing node may separately transmit the first data through the first inter-group path based on the first information.

In a possible implementation, the multiple intra-group paths include a first intra-group path, and the first intra-group path includes the first computing node, a third computing node, and a first access switch. After determining the communication plan between the N computing nodes, the management node further separately sends second information to the first computing node and the third computing node according to the communication plan, where the second information indicates that the first intra-group path is used by the first computing node to send second data to the third computing node. Correspondingly, the first computing node and the third computing node may separately transmit the second data through the first intra-group path based on the second information.

According to a second aspect, this application provides a distributed training system. The distributed training system includes K core switches and a computing cluster, where the computing cluster includes M groups, and each group includes one or more computing nodes.

The K core switches are configured to connect computing nodes in different groups in the M groups.

Further, the distributed training system includes a management node.

The management node is an external node independent of the computing cluster. The management node is separately connected to multiple computing nodes in the computing cluster, to manage the computing nodes in the computing cluster. In a specific implementation, the management node is, for example, a computer, or a module in the computer, for example, a plug-in.

Alternatively, the management node is a computing node in the computing cluster, and the computing node is separately connected to multiple other computing nodes in the computing cluster. The computing node not only has a capability of managing the multiple other computing nodes in the computing cluster, but also has a computing capability of another computing node. In a specific implementation, the management node is, for example, a physical server. The physical server includes one or more computing units (or referred to as processing units). The computing unit is, for example, a GPU, a CPU, or an NPU.

Alternatively, the management node includes multiple functional modules, some of the multiple functional modules are deployed on the computing node in the computing cluster, and other remaining functional modules are deployed on an external node independent of the computing cluster.

The management node is configured to: obtain a network topology, and determine a communication plan between N computing nodes based on the network topology, where the network topology includes a connection relationship between the K core switches and the computing node in the computing cluster, and the N computing nodes are computing nodes that are in the computing cluster and that are configured to train a target model in a distributed manner.

The communication plan includes multiple inter-group paths, and for each of the multiple inter-group paths: The inter-group path includes two computing nodes that are in the N computing nodes and that belong to different groups, and the core switch that is in the K core switches and that is configured to connect the two computing nodes, and the inter-group path is used to transmit data between the two computing nodes on the inter-group path.

An amount of data transmitted on each of the multiple inter-group paths meets a preset condition.

K, M, and N are all integers greater than 2.

In a possible implementation, when determining the communication plan between the N computing nodes based on the network topology, the management node is specifically configured to determine the communication plan between the N computing nodes based on the network topology and a communication algorithm, where the communication algorithm is used to aggregate, in distributed training, data obtained by separately performing training by the N computing nodes, to obtain the target model.

In a possible implementation, each of multiple core switches included in the multiple inter-group paths includes one or more traffic ports. That an amount of data transmitted on each of the multiple inter-group paths meets a preset condition includes: A difference between traffic of any two of multiple traffic ports included in the multiple inter-group paths is less than a threshold, where traffic of a traffic port is associated with a data amount of data transmitted between two computing nodes on an inter-group path to which the traffic port belongs.

In a possible implementation, when each inter-group path includes multiple levels of core switches, core switches to which any two traffic ports whose difference is less than the threshold belong to a same level.

In a possible implementation, the distributed training system further includes: M access switches respectively corresponding to the M groups, where any one of the M access switches is configured to connect a computing node in a group corresponding to the access switch to the K core switches. The network topology includes a connection relationship between the K core switches, the M access switches, and the computing node in the computing cluster. For each of the multiple inter-group paths, the inter-group path further includes two access switches respectively corresponding to the groups to which the two computing nodes belong.

In a possible implementation, the communication plan further includes multiple intra-group paths, each intra-group path includes two computing nodes that are in the N computing nodes and that belong to a same group, and an access switch that is in the M access switches and that corresponds to the group, and the intra-group path is used to transmit data between the two computing nodes on the intra-group path.

In a possible implementation, a data amount of the data transmitted between the two computing nodes on the intra-group path is greater than the data amount of the data transmitted between the two computing nodes on the inter-group path.

In a possible implementation, the multiple inter-group paths include a first inter-group path, and the first inter-group path includes a first computing node, a second computing node, and a first core switch. The management node is further configured to separately send first information to the first computing node and the second computing node according to the communication plan, where the first information indicates that the first inter-group path is used by the first computing node to send first data to the second computing node. The first computing node is configured to send the first data to the first core switch based on the first information. The first core switch is configured to: receive the first data from the first computing node, and forward the first data to the second computing node. The second computing node is configured to receive the first data from the first core switch based on the first information.

In a possible implementation, the first inter-group path further includes a first access switch corresponding to the first node and a second access switch corresponding to the second node. The first computing node is specifically configured to send the first data to the first access switch based on the first information. The first access switch is configured to: receive the first data from the first computing node, and send the first data to the first core switch. The first core switch is specifically configured to: receive the first data from the first access switch, and forward the first data to the second access switch. The second access switch is configured to: receive the first data from the first core switch, and send the first data to the second computing node. The second computing node is specifically configured to receive the first data from the second access switch based on the first information.

In a possible implementation, the multiple intra-group paths include a first intra-group path, and the first intra-group path includes the first computing node, a third computing node, and a first access switch. The management node is further configured to separately send second information to the first computing node and the third computing node according to the communication plan, where the second information indicates that the first intra-group path is used by the first computing node to send second data to the third computing node. Correspondingly, the first computing node is configured to send the second data to the first access switch based on the second information. The first access switch is configured to forward the second data to the third computing node. The third computing node is configured to receive the second data from the first access switch based on the first information.

According to a third aspect, this application provides a distributed training apparatus. The apparatus is specifically a management node.

The management node is an external node independent of a computing cluster. The external node is separately connected to multiple computing nodes in the computing cluster, to manage the computing nodes in the computing cluster. In a specific implementation, the management node is, for example, a computer, or a module in the computer, for example, a plug-in.

Alternatively, the management node is a computing node in the computing cluster, and the computing node is separately connected to multiple other computing nodes in the computing cluster. The computing node not only has a capability of managing the multiple other computing nodes in the computing cluster, but also has a computing capability of another computing node. In a specific implementation, the management node is, for example, a physical server. The physical server includes one or more computing units (or referred to as processing units). The computing unit is, for example, a GPU, a CPU, or an NPU.

Alternatively, the management node includes multiple functional modules, some of the multiple functional modules are deployed on the computing node in the computing cluster, and other remaining functional modules are deployed on an external node independent of the computing cluster.

The distributed training apparatus includes:
an obtaining module, configured to obtain a network topology, where the network topology includes a connection relationship between a core switch and the computing node in the computing cluster, the computing cluster includes M groups, and each group includes one or more computing nodes; and
a processing module, configured to determine a communication plan between N computing nodes based on the network topology, where the N computing nodes are computing nodes that are in the computing cluster and that are configured to train a target model in a distributed manner; the communication plan includes multiple inter-group paths, and for each of the multiple inter-group paths: the inter-group path includes two computing nodes that are in the N computing nodes and that belong to different groups, and a core switch configured to connect the two computing nodes, and the inter-group path is used to transmit data between the two computing nodes on the inter-group path; an amount of data transmitted on each of the multiple inter-group paths meets a preset condition; and
both M and N are integers greater than 2.

In a possible implementation, when determining the communication plan between the N computing nodes based on the network topology, the processing module is specifically configured to determine the communication plan between the N computing nodes based on the network topology and a communication algorithm, where the communication algorithm is used to aggregate, in distributed training, data obtained by separately performing training by the N computing nodes, to obtain the target model.

In a possible implementation, each of multiple core switches included in the multiple inter-group paths includes one or more traffic ports. That an amount of data transmitted on each of the multiple inter-group paths meets a preset condition includes: A difference between traffic of any two of multiple traffic ports included in the multiple inter-group paths is less than a threshold, where traffic of a traffic port is associated with a data amount of data transmitted between two computing nodes on an inter-group path to which the traffic port belongs.

In a possible implementation, when each inter-group path includes multiple levels of core switches, core switches to which any two traffic ports whose difference is less than the threshold belong to a same level.

In a possible implementation, for any two of the multiple inter-group paths: The two inter-group paths include different core switches, or the two inter-group paths include a same core switch, and traffic ports of the core switch on the two inter-group paths are different.

In a possible implementation, the network topology includes a connection relationship between the core switch, the computing cluster, and an access switch. For each of the multiple inter-group paths: The inter-group path further includes two access switches respectively corresponding to the two computing nodes, and each computing node on the inter-group path is connected to the core switch by using the access switch corresponding to the computing node.

In a possible implementation, the communication plan further includes multiple intra-group paths, each intra-group path includes two computing nodes that are in the N computing nodes and that belong to a same group, and an access switch corresponding to the group, and the intra-group path is used to transmit data between the two computing nodes on the intra-group path.

In a possible implementation, a data amount of the data transmitted between the two computing nodes on the intra-group path is greater than the data amount of the data transmitted between the two computing nodes on the inter-group path.

In a possible implementation, the M groups respectively correspond to M access switches. For each of the M access switches: The access switch includes K first ports and K second ports respectively corresponding to the K first ports; the K first ports are respectively connected to K core switches; the K second ports are respectively connected to K ports of a computing node in a group corresponding to the access switch; and K is an integer greater than 2.

In a possible implementation, the obtaining module is further configured to obtain a training task, where the training task includes a total quantity N of computing nodes and the communication algorithm. When determining the communication plan between the N computing nodes based on the network topology, the processing module is specifically configured to: determine the N computing nodes and the communication plan between the N computing nodes from multiple computing nodes in an idle state in the computing cluster based on the network topology, the total quantity N of computing nodes, and the communication algorithm.

In a possible implementation, when determining the N computing nodes and the communication plan between the N computing nodes from the multiple computing nodes in the idle state in the computing cluster based on the network topology, the total quantity N of computing nodes, and the communication algorithm, the processing module is specifically configured to: determine the N computing nodes from the multiple computing nodes in the idle state in the computing cluster based on the network topology and the total quantity N of computing nodes; pair two computing nodes that are in the N computing nodes and that belong to a same group, and when multiple unpaired computing nodes are left, pair the multiple unpaired computing nodes, to obtain N/2 node pairs; determine a communication plan between the N computing nodes in each of multiple rounds of communication based on the multiple rounds of communication of the communication algorithm and the N/2 node pairs, where for a communication plan in any round of communication, a larger amount of data transmitted between two computing nodes in the communication plan indicates a smaller quantity of inter-group paths included in the communication plan; and if it is determined that in an i^{th} round of communication in the multiple rounds of communication, the communication plan between the N computing nodes includes multiple inter-group paths, and an amount of data transmitted on each of the multiple inter-group paths does not meet the preset condition, adjust the communication plan between the N computing nodes in the i^{th} round of communication, where i is a positive integer.

In a possible implementation, the multiple inter-group paths include a first inter-group path, and the first inter-group path includes a first computing node, a second computing node, and a first core switch. The apparatus further includes a sending module, and the sending module is configured to separately send first information to the first computing node and the second computing node, where the first information indicates that the first inter-group path is used by the first computing node to send first data to the second computing node.

In a possible implementation, the multiple intra-group paths include a first intra-group path, and the first intra-group path includes the first computing node, a third computing node, and a first access switch. The apparatus further includes a sending module, and the sending module is configured to separately send second information to the first computing node and the third computing node, where the second information indicates that the first intra-group path is used by the first computing node to send second data to the third computing node.

According to a fourth aspect, an embodiment of this application provides a computing device, including a processor. The processor is connected to a memory, the memory is configured to store a computer program, and the processor is configured to execute the computer program stored in the memory, to enable the computing device to perform the method according to any one of the first aspect or the possible implementations of the first aspect.

According to a fifth aspect, an embodiment of this application provides a computer-readable storage medium. The computer-readable storage medium stores a computer program or instructions. When the computer program or the instructions are executed by a computing device, the method according to any one of the first aspect or the possible implementations of the first aspect is implemented.

According to a sixth aspect, an embodiment of this application provides a computer program product. When a computer reads and executes the computer program product, the computer is enabled to perform the method according to any one of the first aspect or the possible implementations of the first aspect.

For technical effects that can be achieved in any one of the second aspect to the sixth aspect, refer to descriptions of beneficial effects in the first aspect. Details are not described herein again.

### BRIEF DESCRIPTION OF DRAWINGS

FIG. 1 is a diagram of a structure of a neural network;
FIG. 2 is a diagram of a stochastic gradient descent method;
FIG. 3 is a diagram of performing data aggregation based on an HD algorithm;
FIG. 4 is a diagram of an example of a distributed training system according to this application;
FIG. 5a is a diagram of an example of an interface connection relationship in a distributed training system according to this application;
FIG. 5b is a diagram of an example of an interface connection relationship in another distributed training system according to this application;
FIG. 6 is a diagram of an example of an architecture of another distributed training system according to this application;
FIG. 7 is a schematic flowchart of an example of a distributed training method according to this application;
FIG. 8 is a schematic flowchart of an example of determining, by a management node, a communication plan according to this application;
FIG. 9 is a diagram of an example of a communication relationship based on an HD algorithm according to this application;
FIG. 10 is a diagram of an example of a structure of a management node according to this application;
FIG. 11 is a diagram of an example of a structure of a distributed training apparatus according to this application; and
FIG. 12 is a diagram of an example of a structure of another distributed training apparatus according to this application.

### DESCRIPTION OF EMBODIMENTS

To better explain embodiments of this application, related terms or technologies in this application are first explained as follows.

### 1. Neural network

The neural network (neural network, NN) is a mathematical model or a computational model that imitates a structure and a function of a biological neural network (a central nervous system of an animal, especially a brain). The neural network is formed by a large quantity of connected neurons for computation. One neural network may include multiple neural network layers with different functions, and each layer may be represented as a function y = f_{w}(x), where f is a function of the function, w is a weight, x is an input, and y is an output.

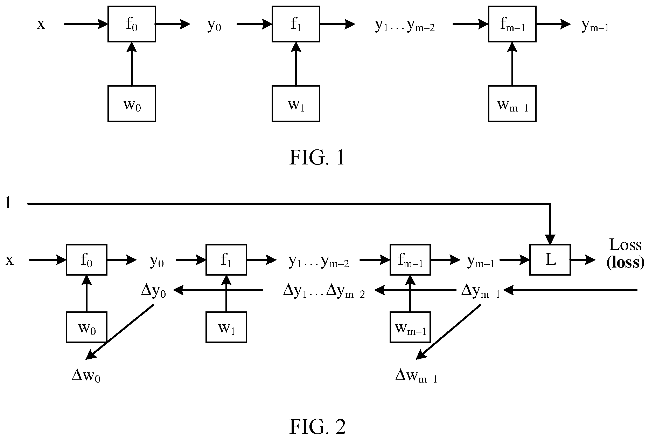

FIG. 1 is a diagram of a structure of a neural network. The neural network may include m layers connected head to tail, where m is an integer greater than or equal to 2. A first layer of the neural network may be represented as a function f₀, where f₀ has an input of x, an output of y₀, and a weight of w₀; and a second layer of the neural network may be represented as a function f₁, where f₁ has an input of y₀, an output of y₁, and a weight of w₁.

### 2. Model training

It is assumed that there is a data set {(x₀, l₀), ..., (xₙ₋₁, lₙ₋₁)}, where x₀, ..., and xₙ₋₁ are n inputs, and corresponding l₀, ..., and lₙ₋₁ are respectively expected outputs of the n inputs, and are usually also referred to as labels (labels). Each (xⱼ, lⱼ) is referred to as one piece of sample data, and j is an integer in [0, n-1].

Any input (which may be represented as xⱼ) in the data set is input into the neural network in FIG. 1, to obtain an actual output of the neural network, for example, represented as y^{j}ₘ₋₁. A loss (loss) is computed based on the actual output y^{j}ₘ₋₁, an expected output lⱼ, and a loss function L of the neural network.

An objective of the model training is to solve w₀, ..., and wₘ₋₁, so that y^{j}ₘ₋₁ and lⱼ are closest to each other in the loss function L. For a solving process, refer to an example of a stochastic gradient descent (stochastic gradient descent, SGD) method shown in FIG. 2. First, a gradient Δyₘ₋₁ of an (m-1)^{th} layer is determined by using loss and yₘ₋₁, and a gradient Δwₘ₋₁ of the (m-1)^{th} layer is determined based on Δyₘ₋₁ and wₘ₋₁; then a gradient Δyₘ₋₂ of an (m-2)^{th} layer is determined by using Δyₘ₋₁ and yₘ₋₂, and a gradient Δwₘ₋₂ of the (m-2)^{th} layer is determined based on Δyₘ₋₂ and wₘ₋₂; and by analogy, Δy and Δw of each layer are obtained. That is, Δy₀, Δw₀, ..., Δy_{*m*-1}, and Δwₘ₋₁ are obtained.

### 3. Distributed training

During the model training, because a data amount of training data needed by the model training is excessively large, or a computation amount of a model is large, to train the model more efficiently and quickly, multiple computing nodes included in a computing cluster may be used to jointly train the model. The model training manner may be referred to as distributed model training or distributed training.

The computing node may include one or more computing units, and the computing unit is, for example, a GPU, a CPU, or an NPU.

Specifically, a data set of the training data is divided into multiple data subsets respectively corresponding to multiple computing nodes. A size of the data subset is, for example, a batch size (batch size) or a mini batch size (mini batch size). In each round of iteration of the distributed training, the multiple computing nodes input their respective data subsets into local neural networks, to obtain actual outputs of their respective neural networks, and further determine, based on the actual outputs, expected outputs, and loss functions of their respective neural networks, weight gradients corresponding to (m-1)^{th} layers of their respective neural networks. Subsequently, the multiple computing nodes perform data aggregation, and perform a next round of iteration based on intermediate data obtained after the aggregation.

A distributed training manner in which the data set is divided may be referred to as a data parallel training manner. The distributed training manner further includes a model parallel training manner. Specifically, the model is divided to obtain multiple sub-models, and the multiple sub-models are respectively run by corresponding computing nodes. In each round of training iteration in the model parallel training manner, the multiple computing nodes also perform similar data aggregation, to obtain an input in a next round of model training.

### 4. Collective communication (collective communication)

In each round of iteration of a distributed training process, multiple computing nodes need to aggregate their respective intermediate data obtained by performing model training, and perform a next round of iteration based on intermediate data obtained after the aggregation. A final model (denoted as a target model) is obtained through multiple rounds of iteration.

The intermediate data may include one or more of a feature (feature or activation), a gradient, and a model parameter that are obtained by performing model training by each of the computing nodes. The feature is, for example, a feature of training data obtained through model learning. The model parameter is, for example, a parameter w of a function f in a neural network. The gradient is, for example, a difference Δw*ⱼ* of w*ⱼ* generated in backward propagation. For ease of description, the intermediate data may be referred to as data for short below.

Specifically, the multiple computing nodes may complete the data aggregation through collective communication. An aggregation algorithm (or referred to as a communication algorithm) used in the collective communication is, for example, a ring (ring) algorithm, a halving-doubling (half-doubling, HD) algorithm, or a binary tree (binary tree) algorithm.

The following uses the HD algorithm as an example for description.

For example, four computing nodes are configured to perform distributed training, and the four computing nodes are respectively represented as a computing node a to a computing node d. In one round of iteration, the four computing nodes perform data aggregation by using the HD algorithm. Each computing node divides data of the computing node into four copies. Specifically, the computing node a includes data a1 to data a4, the computing node b includes data b1 to data b4, the computing node c includes data c1 to data c4, and the computing node d includes data d1 to data d4.

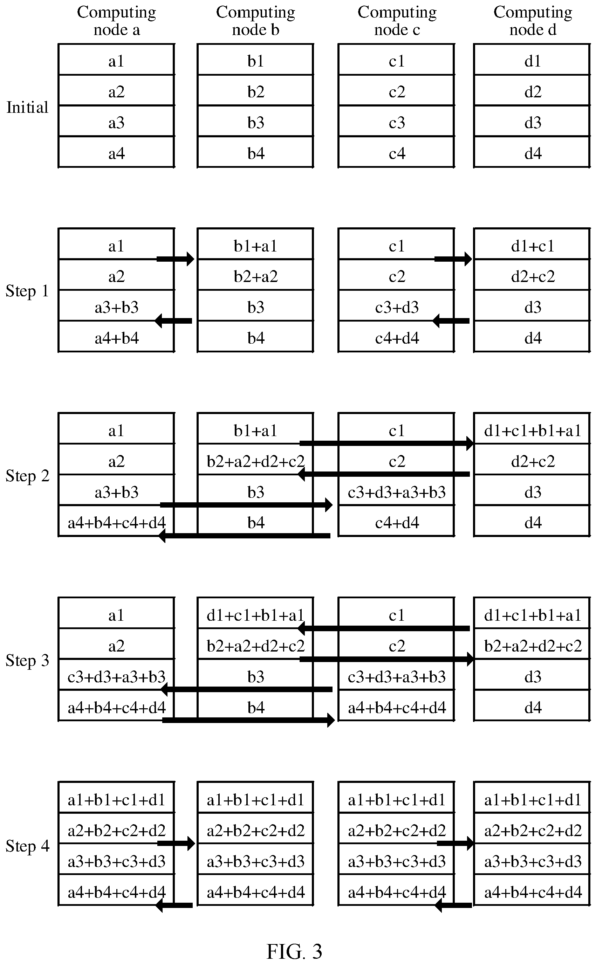

FIG. 3 shows an example in which the four computing nodes perform data aggregation by using the HD algorithm according to this application. The HD algorithm includes two parts: reduce-scatter and allgather.

Reduce-scatter of the HD algorithm includes step 1 and step 2.

### In step 1:

Two node pairs formed by the four computing nodes are respectively (the computing node a and the computing node b) and (the computing node c and the computing node d). The two computing nodes in the node pair exchange data with each other.

In an example of (the computing node a and the computing node b), the computing node a and the computing node b exchange data with each other. Specifically, the computing node a sends the data a1 and the data a2 to the computing node b, and the computing node b sends the data b3 and the data b4 to the computing node a. Correspondingly, the computing node a includes the data a1, the data a2, data a3+b3, and data a4+b4; and the computing node b includes data a1+b1, data a2+b2, the data b3, and the data b4. A manner of exchanging data between (the computing node c and the computing node d) is similar to that between (the computing node a and the computing node b). For details, refer to step 1 in FIG. 3.

### In step 2:

Two node pairs formed by the four computing nodes are respectively (the computing node a and the computing node c) and (the computing node b and the computing node d). The two computing nodes in the node pair exchange data with each other.

In an example of (the computing node a and the computing node c), the computing node a and the computing node c exchange data with each other. Specifically, the computing node a sends the data a3+b3 to the computing node c, and the computing node c sends data c4+d4 to the computing node a. Correspondingly, the computing node a includes the data a1, the data a2, the data a3+b3, and data a4+b4+c4+d4; and the computing node c includes the data c1, the data c2, data a3+b3+c3+d3, and the data c4+d4. A manner of exchanging data between (the computing node b and the computing node d) is similar to that between (the computing node a and the computing node c). For details, refer to step 2 in FIG. 3.

Allgather of the HD algorithm includes step 3 and step 4.

### In step 3:

Two node pairs formed by the four computing nodes are respectively (the computing node a and the computing node c) and (the computing node b and the computing node d). The two computing nodes in the node pair exchange data with each other.

In an example of (the computing node a and the computing node c), the computing node a and the computing node c exchange data with each other. Specifically, the computing node a sends the data a4+b4+c4+d4 to the computing node c, and the computing node c sends the data a3+b3+c3+d3 to the computing node a. Correspondingly, the computing node a includes the data a1, the data a2, the data a3+b3+c3+d3, and the data a4+b4+c4+d4; and the computing node c includes the data c1, the data c2, the data a3+b3+c3+d3, and the data a4+b4+c4+d4. A manner of exchanging data between (the computing node b and the computing node d) is similar to that between (the computing node a and the computing node c). For details, refer to step 3 in FIG. 3.

### In step 4:

Two node pairs formed by the four computing nodes are respectively (the computing node a and the computing node b) and (the computing node c and the computing node d). The two computing nodes in the node pair exchange data with each other.

In an example of (the computing node a and the computing node b), the computing node a and the computing node b exchange data with each other. Specifically, the computing node a sends the data a3+b3+c3+d3 and the data a4+b4+c4+d4 to the computing node b, and the computing node b sends data a1+b1+c1+d1 and data a2+b2+c2+d2 to the computing node a. Correspondingly, the computing node a includes the data a1+b1+c1+d1, the data a2+b2+c2+d2, the data a3+b3+c3+d3, and the data a4+b4+c4+d4; and the computing node b includes the data a1+b1+c1+d1, the data a2+b2+c2+d2, the data a3+b3+c3+d3, and the data a4+b4+c4+d4. A manner of exchanging data between (the computing node c and the computing node d) is similar to that between (the computing node a and the computing node b). For details, refer to step 4 in FIG. 3.

In this way, each of the computing node a, the computing node b, the computing node c, and the computing node d obtains a1+b1+c1+d1, a2+b2+c2+d2, a3+b3+c3+d3, and a4+b4+c4+d4.

In each step of the foregoing HD algorithm, all computing nodes are paired to obtain multiple node pairs (that is, each step corresponds to one pairing of computing nodes), and two computing nodes in each node pair exchange data. Further, it may be assumed that the computing node a to the computing node d are sequentially arranged in actual deployment, and a distance between any two adjacent computing nodes is a fixed value. In other words, distances between the computing node a and the computing node b, the computing node b and the computing node c, and the computing node c and the computing node d each are the fixed value. It may also be understood that the computing node a is farthest from the computing node d, the computing node a is closest to the computing node b, and the like. Pairing of computing nodes in each step may be determined based on a distance between two of the four computing nodes.

Specifically, in reduce-scatter, it is set that a distance between two paired computing nodes gradually increases, and an amount of transmitted data gradually decreases. For example, in step 1, the computing node a is paired with the computing node b. In step 2, the computing node a is paired with the computing node c. A distance between the computing node a and the computing node b is half of a distance between the computing node a and the computing node c, and an amount of data transmitted between the computing node a and the computing node b is twice an amount of data transmitted between the computing node a and the computing node c. In allgather, it is set that a distance between two paired computing nodes gradually decreases, and an amount of transmitted data gradually increases. For example, in step 3, the computing node a is paired with the computing node c. In step 4, the computing node a is paired with the computing node b. The distance between the computing node a and the computing node c is twice the distance between the computing node a and the computing node b, and the amount of the data transmitted between the computing node a and the computing node c is half of the amount of the data transmitted between the computing node a and the computing node b. It may be understood that step 1 and step 2 in reduce-scatter are opposite to step 3 and step 4 in allgather. The node pair in step 1 may be the same as the node pair in step 4, and the node pair in step 2 may be the same as the node pair in step 3.

It should be noted that the two computing nodes in the node pair need to exchange data, that is, the two computing nodes need to be connected. With reference to the example in FIG. 3, the computing node a needs to be separately connected to the computing node b and the computing node c, and the computing node b needs to be separately connected to the computing node a and the computing node d. However, in another communication algorithm, the computing node a may further need to be connected to another computing node. For example, in the ring algorithm, the computing node a further needs to be connected to the computing node d.

In addition, the four computing nodes are used as an example for description above. Certainly, it may be further understood that, in another communication algorithm, more computing nodes may be further included, for example, eight computing nodes or 16 computing nodes.

This application provides a distributed training system. The distributed training system includes K core switches and a computing cluster. The computing cluster includes M groups, each group includes one or more computing nodes, and quantities of computing nodes in the groups are the same or different. The computing node may be considered as a physical server, and the computing node includes one or more computing units (or referred to as processing units), for example, a CPU, an NPU, or a GPU. Both M and K are integers greater than 2.

Specifically, the K core switches are configured to connect computing nodes in different groups in the M groups. In other words, two computing nodes respectively included in any two of the M groups can be connected by using one or more of the K core switches. The core switch is, for example, a spine (spine) switch.

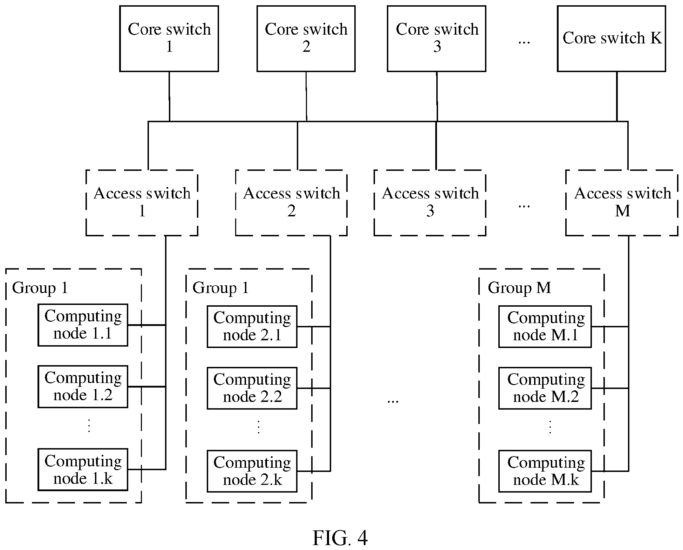

FIG. 4 is a diagram of an example of a distributed training system. The K core switches are respectively denoted as a core switch 1 to a core switch K, the M groups are respectively denoted as a group 1 to a group M, and each group includes k computing nodes. The group 1 is used as an example, and k computing nodes in the group 1 are respectively denoted as a computing node 1.1 to a computing node 1.k. For numbers of computing nodes in other groups, refer to FIG. 4.

For example, the computing node 1.1 in the group 1 may be connected to the computing node 2.1 in the group 2 by using the core switch 1. That is, the computing node 1.1 may transmit data to the computing node 2.1 by using the core switch 1.

Optionally, the distributed training system further includes M access switches respectively corresponding to the M groups. Any one of the M access switches is used as an example for description. The access switch is configured to connect a computing node in a group corresponding to the access switch to a core switch that needs to be connected to the computing node. With reference to the example in FIG. 4, the M access switches are respectively denoted as an access switch 1 to an access switch M. The access switch 1 is configured to connect the computing node 1.1 to the core switch 1, or the access switch 1 is configured to connect the computing node 1.2 to the core switch 2, and the like. The access switch 2 is configured to connect the computing node 2.1 to the core switch 1, or the access switch 2 is configured to connect the computing node 2.2 to the core switch 2, and the like.

The access switch is, for example, a high-performance top-of-rack (top-of-rack, tor) switch.

In this application, it may be considered that the access switch is connected upwards to the core switch, and is connected downwards to the computing node. Correspondingly, the computing node is connected upwards to the access switch, and the core switch is connected downwards to the access switch.

Further, any one of the M access switches is connected downwards to multiple computing nodes in a group corresponding to the access switch, so that the access switch is connected to any two of the multiple computing nodes in the group corresponding to the access switch. Still refer to FIG. 4. The group 1 includes the computing node 1.1 to the computing node 1.k, and any two of the computing node 1.1 to the computing node 1.k can be connected by using the access switch 1. The group 2 includes the computing node 2.1 to a computing node 2.k, and any two of the computing node 2.1 to the computing node 2.k can be connected by using the access switch 2.

The M access switches are all connected upwards to a same core switch, so that any two of the M access switches can be connected by using the core switch. With reference to the example in FIG. 4, the M access switches are all connected upwards to the core switch 1, so that any two of the M access switches can be connected by using the core switch 1.

Data can be transmitted between any two computing nodes in the distributed training system. For details, refer to the following example 1 and example 2.

Example 1: Two computing nodes connected to a same access switch may transmit data by using the access switch. With reference to the example in FIG. 4, both the computing node 1.1 and the computing node 1.2 are connected to the access switch 1, and a path through which the computing node 1.1 sends data to the computing node 1.2 is: computing node 1.1→access switch 1→computing node 1.2. In this application, "→" may represent a data transmission direction.

Example 2: Two computing nodes connected to different access switches may transmit data by using the access switches respectively connected to the two computing nodes and a core switch connected to both the two access switches. With reference to the example in FIG. 4, the computing node 1.1 is connected to the access switch 1, the computing node 2.1 is connected to the access switch 2, and both the access switch 1 and the access switch 2 are connected to the core switch 1. A path through which the computing node 1.1 sends data to the computing node 2.1 is: computing node 1.1→access switch 1→core switch 1→access switch 2→computing node 2.1.

In this application, two computing nodes in a same group may perform intra-group communication by using an access switch corresponding to the group. A path through which the intra-group communication passes may be referred to as an intra-group path, and the transmission manner may be referred to as an intra-group transmission manner. Correspondingly, two computing nodes in different groups may perform inter-group communication by using access switches respectively corresponding to the different groups, and the core switch. A path through which the inter-group communication passes may be referred to as an inter-group path, and the transmission manner may be referred to as an inter-group transmission manner.

Further, the access switch includes a first port configured to be connected upwards to the core switch, and a second port configured to be connected downwards to the computing node. The computing node includes a third port configured to be connected upwards to the access switch. The core switch includes a fourth port configured to be connected downwards to the access switch.

For example, in a connection relationship between an access switch and a core switch, each access switch includes K first ports, and the K first ports are respectively connected upwards to one fourth port of each of the K core switches. Each core switch includes M fourth ports, and each of the M fourth ports are connected downwards to one first port of each of the M access switches.

For example, in a connection relationship between an access switch and a computing node, each access switch further includes K second ports, and the K second ports are connected downwards to a third port of a computing node in a group corresponding to the access switch. For example, each computing node includes one third port, the access switch includes four second ports, and the access switch is connected downwards to four computing nodes in the group corresponding to the access switch. For another example, each computing node includes eight third ports, the access switch includes 32 second ports, and the access switch is connected downwards to four computing nodes in the group corresponding to the access switch.

The following provides two port connection manners of the core switch, the access switch, and computing node during specific implementation.

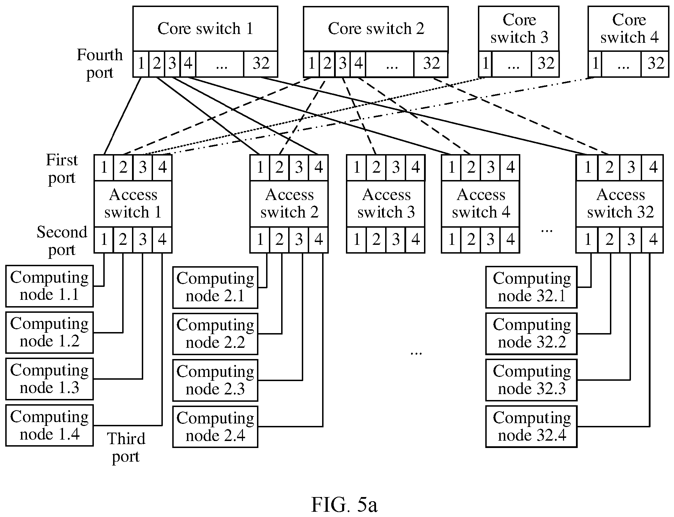

Manner 1: In FIG. 5a, there are four core switches, 32 access switches, and four computing nodes in each group. That is, both K and k are equal to 4, and M is equal to 32. Correspondingly, each core switch includes 32 fourth ports (denoted as a fourth port 1 to a fourth port 32), each access switch includes four first ports (denoted as a first port 1 to a first port 4) and four second ports (denoted as a second port 1 to a second port 4), and each computing node includes one third port. For the port connection relationship included in the distributed training system, refer to FIG. 5a.

An access switch 1 is used as an example. Four first ports of the access switch 1 are respectively connected upwards to a fourth port 1 of a core switch 1, a fourth port 1 of a core switch 2, a fourth port 1 of a core switch 3, and a fourth port 1 of a core switch 4. Four second ports are respectively connected downwards to four computing nodes, that is, a computing node 1.1 to a computing node 1.4.

Further, the core switch 1 is used as an example. 32 fourth ports of the core switch 1 are respectively connected downwards to a first port 1 of the access switch 1, a first port 1 of an access switch 2, ..., a first port 1 of an access switch 31, and a first port 1 of an access switch 32.

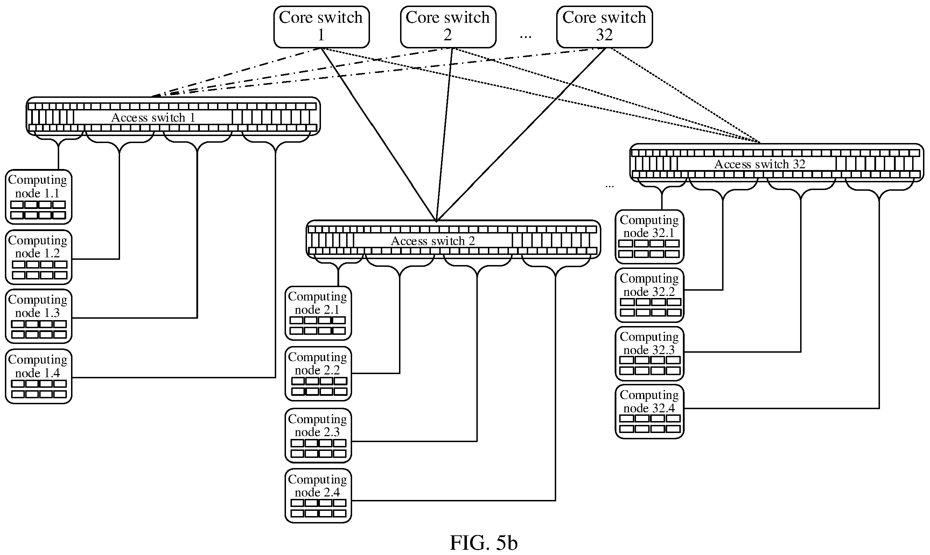

Manner 2: In FIG. 5b, there are 32 core switches, 32 access switches, and four computing nodes in each group. That is, K is equal to 32, M is equal to 32, and k is equal to 4. Correspondingly, each core switch includes 32 fourth ports (denoted as a fourth port 1 to a fourth port 32), each access switch includes 32 first ports (denoted as a first port 1 to a first port 32) and 32 second ports (denoted as a second port 1 to a second port 32), and each computing node includes eight third ports. For the port connection relationship included in the distributed training system, refer to FIG. 5b.

An access switch 1 is used as an example. 32 first ports of the access switch 1 are respectively connected upwards to a fourth port 1 of a core switch 1, a fourth port 1 of a core switch 2, a fourth port 1 of a core switch 3, ..., a fourth port 1 of a core switch 31, and a fourth port 1 of a core switch 32. 32 second ports are respectively connected downwards to four computing nodes, that is, a computing node 1.1 to a computing node 1.4.

Further, the core switch 1 is used as an example. 32 fourth ports of the core switch 1 are respectively connected downwards to a first port 1 of the access switch 1, a first port 1 of an access switch 2, ..., a first port 1 of an access switch 31, and a first port 1 of an access switch 32.

Further, inside the access switch, K first ports are bound to K second ports. In other words, inside the access switch, a one-to-one mapping relationship between the K first ports and the K second ports is set, so that in the access switch, data input to a first port in multiple first ports is output from a second port that is in the multiple second ports and that corresponds to the first port. Still with reference to the example in FIG. 5a, in the access switch 1, the first port 1 to a first port 4 respectively correspond to a second port 1 to a second port 4. When receiving data through the first port 1, the access switch 1 may output the data through the second port 1. When receiving data through the first port 2, the access switch 1 may output the data through the second port 2. In this way, the access switch is prevented from inputting data to an unspecified core switch through an unspecified second port in multiple second ports based on a load balancing principle.

It may be further considered that the distributed training system shown in FIG. 4, FIG. 5a, or FIG. 5b includes one core layer and one access layer. The one core layer includes the core switch 1 to the core switch K, and the one access layer includes the access switch 1 to the access switch M. In addition, this application may further include multiple core layers. The multiple core layers are located above the access layer, and are configured to implement a connection between any two access switches at the access layer. At any two adjacent core layers of the multiple core layers, one or more core switches at an upper core layer are configured to connect any two core switches at a lower core layer.

It may also be understood that the multiple core layers are configured to implement a connection between any two computing nodes in a computing cluster.

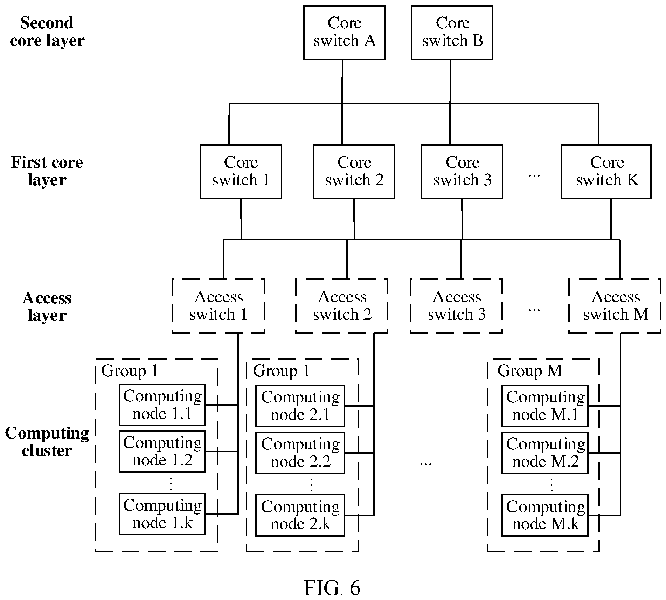

FIG. 6 is a diagram of an example of an architecture of another distributed training system according to this application. The distributed training system includes two core layers, and the two core layers may be respectively denoted as a first core layer and a second core layer. The second core layer is located above the first core layer, and the first core layer is located above an access layer.

The second core layer includes one or more core switches (FIG. 6 shows two core switches, which are respectively represented as a core switch A and a core switch B). The first core layer includes K core switches (which are still represented as a core switch 1 to a core switch K in FIG. 6). The access layer includes M access switches (which are still represented as an access switch 1 to an access switch M in FIG. 6), the access switch 1 to the access switch M respectively correspond to a group 1 to a group M, and each group still includes one or more computing nodes.

For the second core layer, the one or more core switches at the second core layer are configured to implement a connection between any two core switches at the first core layer. For the first core layer, the K core switches at the first core layer are configured to implement a connection between any two access switches at the access layer. For the access layer, the M access switches at the access layer are configured to implement a connection between any two computing nodes in respective groups. For a specific connection manner, refer to descriptions in embodiments in FIG. 4, FIG. 5a, or FIG. 5b. Details are not described again.

Further, the distributed training system includes a management node.

In any one of FIG. 4 to FIG. 6, the management node is a node independent of the computing cluster. The node is separately connected to multiple computing nodes in the computing cluster, to manage the computing nodes in the computing cluster. In a specific implementation, the management node is, for example, a computer, or a module installed on the computer, for example, a plug-in.

Alternatively, the management node is a computing node in the computing cluster, and the computing node is separately connected to multiple other computing nodes in the computing cluster. The computing node not only has a capability of managing the multiple other computing nodes in the computing cluster, but also has a computing capability of another computing node. In a specific implementation, the management node is, for example, a physical server, and includes one or more computing units (or referred to as processing units), for example, a CPU, an NPU, or a GPU.

Alternatively, the management node includes multiple functional modules, some of the multiple functional modules are deployed on the computing node in the computing cluster, and other remaining functional modules are deployed on an external node independent of the computing cluster.

Specifically, the management node is configured to: select, from the computer cluster, N computing nodes configured to perform distributed training, and further generate a communication plan based on the N computing nodes. The management node is further configured to indicate the communication plan to the N computing nodes, so that the N computing nodes execute an aggregation algorithm in a distributed training process, to obtain data after aggregation.

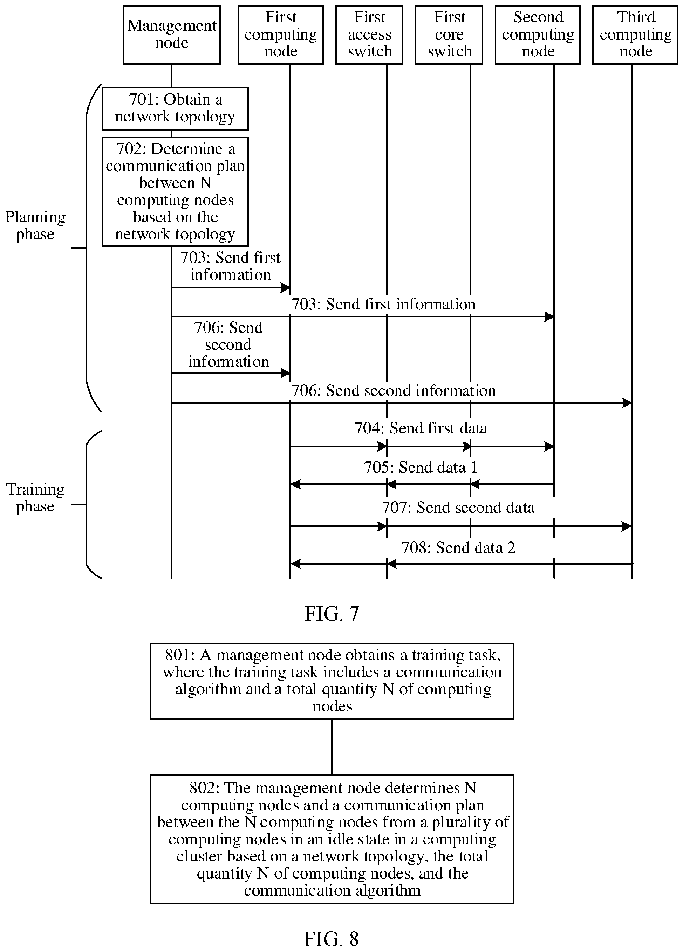

FIG. 7 is a schematic flowchart of an example of a distributed training method.

Step 701: A management node obtains a network topology.

The network topology includes a connection relationship between a core switch and a computing node in a computing cluster. With reference to the example in FIG. 5a, the network topology obtained by the management node includes, for example:
a topology 1, where a computing node 1.1, a computing node 2.1, ..., and a computing node 32.1 are all connected to a core switch 1; and
a topology 2, where a computing node 1.2, a computing node 2.2, ..., and a computing node 32.2 are all connected to a core switch 2.

Optionally, the network topology further includes a connection relationship between an access switch and each of the core switch and the computing node in the computing cluster. With reference to the example in FIG. 5a, in the network topology obtained by the management node:
The topology 1 further includes:
   a topology 1-1, where the computing node 1.1 is connected to the core switch 1 by using an access switch 1;
   a topology 1-2, where the computing node 2.1 is connected to the core switch 1 by using an access switch 2; and
   a topology 1-3, where the computing node 3.1 is connected to the core switch 1 by using an access switch 3.
The topology 2 further includes:
   a topology 2-1, where the computing node 1.2 is connected to the core switch 2 by using the access switch 1;
   a topology 2-2, where the computing node 2.2 is connected to the core switch 2 by using the access switch 2; and
   a topology 2-3, where the computing node 3.2 is connected to the core switch 2 by using the access switch 3.

Optionally, when a distributed training system includes multiple core layers (for example, the first core layer and the second core layer in FIG. 6), the network topology includes not only the connection relationship between the access switch and the computing node in the computing cluster, but also a connection relationship between the access switch and a core switch at the first core layer, and a connection relationship between the core switch at the first core layer and a core switch at the second core layer. With reference to the example in FIG. 6, the network topology obtained by the management node not only includes the topology 1, the topology 2, and the like, but also includes the following topology A and topology B:
a topology A, where the core switch 1, the core switch 2, ..., and a core switch K are all connected to a core switch A; and
a topology B, where the core switch 1, the core switch 2, ..., and the core switch K are all connected to a core switch B.

Certainly, the foregoing is merely an example of a form of the network topology, and the network topology obtained by the management node may alternatively be in another form. This is not limited in this application.

Step 702: The management node determines a communication plan between N computing nodes based on the network topology.

The N computing nodes are configured to jointly train a model (referred to as a target model) in the distributed system.

The communication plan includes X inter-group paths (denoted as an inter-group path 1 to an inter-group path X), where X is an integer greater than 2. Further, each inter-group path includes two computing nodes that are in the N computing nodes and that belong to different groups, and a core switch configured to connect the two computing nodes. For example, with reference to the topology 1, the inter-group path 1 includes the computing node 1.1, the core switch 1, and the computing node 2.1. For example, with reference to the topology 2, the inter-group path 2 includes the computing node 2.2, the core switch 2, and the computing node 32.2.

Each of the X inter-group paths may be used to transmit data between the two computing nodes on the inter-group path. For example, the inter-group path 1 includes the computing node 1.1 and the computing node 2.1, and the inter-group path 1 is used to transmit data between the computing node 1.1 and the computing node 2.1. For another example, the inter-group path 2 includes the computing node 2.2 and the computing node 32.2, and the inter-group path 2 is used to transmit data between the computing node 2.2 and the computing node 32.2.

To avoid traffic congestion of a port of the core switch, an amount of data transmitted on the X inter-group paths determined by the management node based on the network topology needs to meet a preset condition.

For one of the X inter-group paths, when passing through a core switch included in the inter-group path, the inter-group path specifically passes through an input port and an output port of the core switch. In a possible manner, the output port of the core switch through which the inter-group path passes is used as a traffic port, and data traffic (or referred to as traffic) of the traffic port is used to measure whether an amount of data transmitted on the inter-group path meets the preset condition. The data traffic of the traffic port is associated with a data amount of data transmitted between two computing nodes on the inter-group path.

Correspondingly, the X inter-group paths each include Y traffic ports, where Y is an integer greater than 2. In an example, X traffic ports respectively corresponding to the X inter-group paths do not include a same traffic port. That is, X is equal to Y. In another example, X traffic ports respectively corresponding to the X inter-group paths include a same traffic port. In other words, two or more inter-group paths in the X inter-group paths correspond to a same traffic port. That is, X is greater than Y.

That an amount of data transmitted on each of the X inter-group paths meets the preset condition is specifically that a difference between data traffic of any two of the Y traffic ports is less than a threshold.

For example, the X inter-group paths are specifically the inter-group path 1 to an inter-group path 10. That is, X is equal to 10. The inter-group path 1 to the inter-group path 10 respectively correspond to a traffic port 1 to a traffic port 10. That is, Y is equal to 10. A difference between data traffic of any two of the traffic port 1 to the traffic port 10 is less than the threshold. Alternatively, the inter-group path 1 to the inter-group path 6 respectively correspond to a traffic port 1 to a traffic port 6, the inter-group path 7 and the inter-group path 8 correspond to a same traffic port 7, and the inter-group path 9 and the inter-group path 10 correspond to a same traffic port 8. That is, Y is equal to 8. A difference between data traffic of any two of the traffic port 1 to the traffic port 8 is less than the threshold.

With reference to the example in FIG. 5a, the inter-group path 1 includes the computing node 1.1, the core switch 1, and the computing node 2.1. The core switch 1 receives data of the computing node 1.1 through a fourth port 1 of the core switch 1, and outputs the data to the computing node 2.1 through a fourth port 2 of the core switch 1. The fourth port 2 of the core switch 1 is a traffic port (denoted as the traffic port 1) of the core switch 1. Data traffic of the traffic port 1 is associated with an amount of data exchanged between the computing node 1.1 and the computing node 2.1. The inter-group path 2 includes the computing node 2.2, the core switch 2, and the computing node 32.2. The core switch 2 receives data of the computing node 2.2 through a fourth port 2 of the core switch 2, and outputs the data to the computing node 32.2 through a fourth port 32 of the core switch 2. The fourth port 32 of the core switch 2 is a traffic port (denoted as the traffic port 2) of the core switch 2. Data traffic of the traffic port 2 is associated with an amount of data exchanged between the computing node 2.2 and the computing node 32.2. That the inter-group path 1 and the inter-group path 2 meet the preset condition is specifically that a difference between the data traffic of the traffic port 1 and the data traffic of the traffic port 2 is less than the threshold.

It should be noted that, when the distributed training system includes multiple core layers, specifically, for a same core layer, the difference between the data traffic of any two of the Y traffic ports is less than the threshold. Different core layers correspond to a same threshold or different thresholds.

With reference to the example in FIG. 6, the X inter-group paths are specifically the inter-group path 1 to the inter-group path 5. That is, X is equal to 5. At the first core layer, the inter-group path 1 to the inter-group path 3 respectively correspond to a traffic port 11 to a traffic port 13 of the core switch 1, and the inter-group path 4 and the inter-group path 5 correspond to a same traffic port 21 of the core switch 2. At the second core layer, the inter-group path 1 to the inter-group path 5 respectively correspond to a traffic port A1 to a traffic port A5 of the core switch A. Further, the first core layer corresponds to a threshold 1, and the second core layer corresponds to a threshold 2. In this case, a difference between data traffic of any two of the traffic port 11 to the traffic port 13 and the traffic port 21 is less than the threshold 1, and a difference between data traffic of any two of the traffic port A1 to the traffic port A5 is less than the threshold 2.

To better meet the foregoing preset condition, when determining the communication plan between the N computing nodes, specifically, the management node may determine that any two of the X inter-group paths separately include different core switches. It may also be understood that the X inter-group paths respectively correspond to X core switches, so that the X different core switches respectively transmit data corresponding to the X inter-group paths, to avoid a problem that traffic congestion is caused because a core switch needs to transmit data corresponding to multiple inter-group paths at the same time.

When determining the communication plan between the N computing nodes, specifically, the management node may further determine that when two inter-group paths in the X inter-group paths include a same core switch, traffic ports of the same core switch on the two inter-group paths are different. For example, if the management node determines that both the inter-group path 1 and the inter-group path 2 pass through the core switch 1, the management node may further determine that the inter-group path 1 passes through the traffic port 11 of the core switch 1, and the inter-group path 2 passes through the traffic port 12 of the core switch 1. In this way, even if a core switch needs to transmit data corresponding to multiple inter-group paths at the same time, the core switch may transmit the two pieces of data through two different traffic ports, so that the traffic congestion can also be avoided.

Optionally, the network topology further includes the connection relationship between the access switch and each of the core switch and the computing node in the computing cluster. In other words, the network topology specifically includes a connection relationship between the core switch, the computing node in the computing cluster, and the access switch. The inter-group path determined by the management node based on the network topology further includes access switches corresponding to groups to which the two computing nodes belong. The access switch is configured to connect the core switch to a computing node under the access switch.

For example, still with reference to the topology 1, the inter-group path 1 includes the computing node 1.1, the access switch 1, the core switch 1, the access switch 2, and the computing node 2.1. The inter-group path 1 may also be represented as: computing node 1.1<->access switch 1<->core switch 1<->access switch 2<->computing node 2.1, where "↔" represents bidirectional transmission. For example, "computing node 1.1<->access switch 1" indicates that the computing node 1.1 can transmit data to the access switch 1, and the access switch 1 can also transmit data to the computing node 1.1. The access switch 1 is configured to connect the computing node 1.1 to the core switch 1, and the access switch 2 is configured to connect the computing node 2.1 to the core switch 1.

In addition, when determining the communication plan between the N computing nodes, the management node can not only determine the X inter-group paths, but also determine Z intra-group paths, where Z is an integer greater than 2. For any intra-group path, the intra-group path includes two computing nodes that are in the N computing nodes and that belong to a same group, and an access switch (or an access switch corresponding to the group) configured to connect the two computing nodes. For example, with reference to the topology 1, the management node determines that an intra-group path 1 includes the computing node 1.1, the access switch 1, and the computing node 1.2, or the intra-group path 1 is represented as: computing node 1.1<->access switch 1<->computing node 1.2, where "<->" represents bidirectional transmission.

Further, because a quantity of switch layers through which the intra-group path passes is less than a quantity of switch layers through which the inter-group path passes, correspondingly, a speed at which data is transmitted through the intra-group path is higher than a speed at which data is transmitted through the inter-group path. In addition, a traffic path from each input port to each output port is set inside the switch, and there is no data traffic conflict between multiple intra-group paths. In this way, when determining the communication plan, the management node may determine that an amount of data transmitted on the intra-group path is greater than an amount of data transmitted on the inter-group path.

In a possible manner, the management node determines the communication plan between the N computing nodes based on the network topology and a communication algorithm. The communication algorithm is used to aggregate, in a distributed training process, data obtained by separately performing model training by the N computing nodes in each round of iteration, so that the N computing nodes perform a next round of model training based on data after aggregation, to obtain a final target model. The communication algorithm is, for example, a ring algorithm, an HD algorithm, or a binary tree algorithm.

FIG. 8 is a schematic flowchart of an example of determining, by a management node, a communication plan according to this application.

Step 801: A management node obtains a training task, where the training task includes a communication algorithm and a total quantity N of computing nodes.

In a specific implementation, when preparing to train a target model by using a computing cluster, a user may input, to a front-end interface, the total quantity N of computing nodes and the communication algorithm that are needed by distributed training. Correspondingly, the front-end interface generates the training task based on a user input, and sends the training task to the management node.

Optionally, the training task further includes a resource type of the computing node, a parameter of the training task, a task priority, and the like. The resource type includes one or more of a GPU, an NPU, and a CPU. The parameter of the training task is, for example, an iteration termination condition (for example, a quantity of iterations or a gradient condition). The task priority indicates a priority of a current training task, and a higher priority indicates a more important training task. The management node needs to preferentially select a computing node for a training task with a higher priority.

Step 802: The management node determines N computing nodes and a communication plan between the N computing nodes from multiple computing nodes in an idle state in the computing cluster based on the network topology, the total quantity N of computing nodes, and the communication algorithm.

The computing cluster includes an occupied computing node and multiple computing nodes in the idle state. In a possible manner, the management node obtains the multiple computing nodes in the idle state in the current computing cluster, then selects the N computing nodes from the multiple computing nodes in the idle state based on the network topology, the total quantity N of computing nodes, and the communication algorithm, and further determines the communication plan between the N computing nodes. In this solution, the management node first selects the N computing nodes, and then performs communication planning on the selected computing nodes, to reduce a computation amount in a communication planning process.

When selecting the N computing nodes from the multiple computing nodes in the idle state in the current computing cluster, the management node may perform selection based on an affinity principle, that is, select computing nodes in a same group as much as possible, to increase a proportion of an intra-group transmission (intra-group path) manner in each iteration, correspondingly reduce a proportion of inter-group transmission (inter-group path) manner in each iteration, and avoid traffic congestion of a port of a core switch caused by excessive inter-group transmission manners.

Further, after selecting the N computing nodes, the management node may perform the following step a to step c, to properly plan a communication manner (that is, the communication plan) of the N computing nodes in the communication algorithm.

Step a: The management node pairs two computing nodes that are in the N computing nodes and that belong to a same group, and when multiple unpaired computing nodes are left, pairs the multiple unpaired computing nodes, to obtain N/2 node pairs.

In other words, the management node needs to first perform node pairing on the N computing nodes, and pair two computing nodes in a same group as much as possible. After all the two computing nodes in the same group are paired, if there are still multiple unpaired two computing nodes in different groups, node pairing is performed on the multiple two computing nodes in different groups, to obtain N/2 node pairs.

For example, 16 computing nodes are selected, and are respectively:
a computing node 1.1, a computing node 1.2, a computing node 1.3, a computing node 1.4, and a computing node 1.5 in a group 1;
a computing node 2.1, a computing node 2.2, and a computing node 2.3 in a group 2;
a computing node 3.1, a computing node 3.2, a computing node 3.5, and a computing node 3.6 in a group 3; and
a computing node 4.1, a computing node 4.2, a computing node 4.3, and a computing node 4.4 in a group 4.

When performing node pairing, the management node may first pair computing nodes in the group 1 to obtain (the computing node 1.1, the computing node 1.2) and (the computing node 1.3, the computing node 1.4), pair computing nodes in the group 2 to obtain (the computing node 2.1, the computing node 2.2), pair computing nodes in the group 3 to obtain (the computing node 3.1, the computing node 3.2) and (the computing node 3.5, the computing node 3.6), and pair computing nodes in the group 4 to obtain (the computing node 4.1, the computing node 4.2) and (the computing node 4.3, the computing node 4.4). Further, the unpaired computing node 1.5 and computing node 2.3 are left, and the management node pairs the two computing nodes to obtain (the computing node 1.5, the computing node 2.3).

Step b: The management node determines a communication plan between the N computing nodes in each of multiple rounds of communication based on multiple rounds of communication of the communication algorithm and the N/2 node pairs.

For a communication plan in any round of communication, a larger amount of data transmitted between two computing nodes in the communication plan indicates a smaller quantity of inter-group paths included in the communication plan. It may be understood that, in the intra-group communication manner, two computing nodes transmit data by using an access switch, and do not need to pass through the core switch, so that a possibility of traffic congestion is small. Therefore, when the management node performs communication planning, a step of transmitting a large amount of data is needed, and the management node needs to complete the communication planning by using a large quantity of intra-group communication (in other words, a small quantity of inter-group communication), to avoid a traffic congestion problem. With reference to the example in FIG. 3, it may be understood that in reduce-scatter, an amount of data that needs to be transmitted in step 1 is greater than an amount of data that needs to be transmitted in step 2. Therefore, a quantity of inter-group paths included in step 1 is less than a quantity of inter-group paths included in step 2.

For example, the N/2 node pairs obtained by the management node are the same as the example in step a. In this case, reduce-scatter in the HD algorithm includes four steps, which are respectively represented as S1 to S4, and allgather in the HD algorithm includes three steps, which are respectively represented as S5 to S8. That is, there are a total of eight rounds of communication in the HD algorithm. For descriptions of S1 to S4 in reduce-scatter and S5 to S8 in allgather, refer to descriptions in the foregoing embodiment related to FIG. 3. The management node may determine a communication plan between the 16 computing nodes in each of the eight rounds of communication based on the HD algorithm.

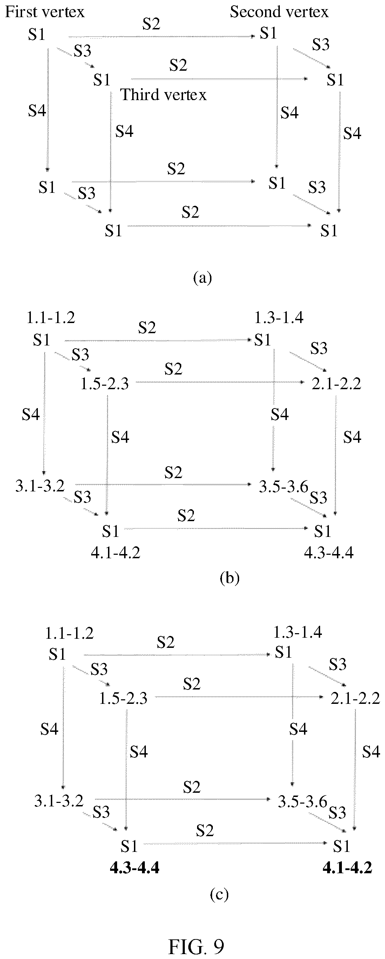

For ease of description, FIG. 9 shows a diagram of an example of a communication relationship based on an HD algorithm. In a cube shown in (a) of FIG. 9, a vertex and an edge respectively represent steps in the HD algorithm, the vertex corresponds to a node pair, and the management node determines a communication plan corresponding to each step based on the node pair corresponding to the vertex.

In (a) of FIG. 9, the vertex in the cube and the node pair are not associated, and the management node may determine an association relationship between the vertex and the node pair in the following manner.

The management node places any node pair on a vertex of the cube, for example, places (a computing node 1.1, a computing node 1.2) at a first vertex of the cube. For ease of description in this application, (the computing node 1.1, the computing node 1.2) is represented as (1.1, 1.2). Others are similar, and details are not described again. The first vertex represents S1 in reduce-scatter, and three edges connected to the first vertex respectively represent S2, S3, and S4 in reduce-scatter. Alternatively, the first vertex represents S8 in allgather, and three edges connected to the first vertex respectively represent S7, S6, and S5 in allgather. The following uses reduce-scatter as an example for description.

If an amount of data transmitted in S2 is greater than an amount of data transmitted in S3 or S4, a node pair is preferentially determined for a second vertex on an edge corresponding to S2, and a node pair to which a computing node that is in a same group as a computing node in a node pair on the first vertex belongs is preferentially selected. For example, (1.3, 1.4) is selected and placed on the second vertex.

Further, two remaining edges connected to the first vertex respectively represent S3 and S4, and two remaining edges connected to the second vertex respectively represent S3 and S4. If an amount of data transmitted in S3 is greater than an amount of data transmitted in S4, a node pair is preferentially determined for a vertex on an edge corresponding to S3. For example, a node pair is first selected for S3 of the first vertex, and the node pair to which the computing node that is in the same group as the computing node in the node pair on the first vertex belongs is still preferentially selected. For example, (1.5, 2.3) is selected and placed on a third vertex. Subsequently, the management node selects a node pair for S3 of the second vertex, and so on. In this way, corresponding node pairs may be respectively assigned to eight vertices of the cube, to obtain a correspondence shown in (b) of FIG. 9.

With reference to (b) of FIG. 9, the first vertex corresponding to S1 corresponds to (1.1, 1.2). That is, the computing node 1.1 communicates with the computing node 1.2 in S1.

Two vertices connected to an edge corresponding to one S2 are respectively (1.1, 1.2) and (1.3, 1.4). Two computing nodes at corresponding locations in the two vertices are respectively the computing node 1.1 and the computing node 1.3, and the computing node 1.2 and the computing node 1.4. Correspondingly, the computing node 1.1 communicates with the computing node 1.3 in S2, and the computing node 1.2 communicates with the computing node 1.4 in S2.

Two vertices connected to an edge corresponding to one S4 are respectively (1.1, 1.2) and (3.1, 3.2). Two computing nodes at corresponding locations in the two vertices are respectively the computing node 1.1 and the computing node 3.1, and the computing node 1.2 and the computing node 3.2. Correspondingly, the computing node 1.1 communicates with the computing node 3.1 in S4, and the computing node 1.2 communicates with the computing node 3.2 in S4.

Two vertices connected to an edge corresponding to another S4 are respectively (1.5, 2.3) and (4.1, 4.2). Two computing nodes at corresponding locations in the two vertices are respectively the computing node 1.5 and the computing node 4.1, and the computing node 2.3 and the computing node 4.2. Correspondingly, the computing node 1.5 communicates with the computing node 4.1 in S4, and the computing node 2.3 communicates with the computing node 4.2 in S4.

Step c: If it is determined that in an i^{th} round of communication in the multiple rounds of communication, the communication plan between the N computing nodes includes multiple inter-group paths, and an amount of data transmitted on each of the multiple inter-group paths does not meet a preset condition, the management node adjusts the communication plan between the N computing nodes in the i^{th} round of communication, where i is a positive integer.

Still with reference to the foregoing example, in S4 (that is, i=4):
When the computing node 4.1 sends data to the computing node 1.5, a path through which the data passes is computing node 4.1-access switch 4→core switch 1→access switch 1→computing node 1.5, and specifically, the path passes through a fourth port 1 of the core switch 1; and
when the computing node 3.1 sends data to the computing node 1.1, a path through which the data passes is computing node 3.1→access switch 3→core switch 1→access switch 1-computing node 1.1, and specifically, the path passes through the fourth port 1 of the core switch 1.

In this way, the two inter-group paths both pass through the fourth port 1 of the core switch 1. That is, the traffic congestion occurs on the fourth port 1 of the core switch 1. That is, an amount of data transmitted on each of the two inter-group paths does not meet the preset condition.

Therefore, the management node may adjust the communication plan between the N computing nodes in this step, so that the amount of data transmitted on each of the multiple inter-group paths meets the preset condition. For example, the node pair in step a is adjusted. For example, an order of the node pair (the computing node 4.1, the computing node 4.2) and an order of the node pair (the computing node 4.3, the computing node 4.4) is exchanged. For a correspondence obtained after exchange, refer to (c) of FIG. 9. Further, in S4:
The computing node 4.3 sends data to the computing node 1.5, a path through which the data passes is computing node 4.3-access switch 4→core switch 3-access switch 1-computing node 1.5, and specifically, the path passes through a fourth port 1 of the core switch 3;
the computing node 3.5 sends data to the computing node 1.3, a path through which the data passes is computing node 3.5-access switch 3→core switch 5-access switch 1-computing node 1.3, and specifically, the path passes through a fourth port 1 of the core switch 5;
the computing node 3.6 sends data to the computing node 1.4, a path through which the data passes is computing node 3.6-access switch 3→core switch 6-access switch 1-computing node 1.4, and specifically, the path passes through a fourth port 1 of the core switch 6;
the computing node 3.1 sends data to the computing node 1.1, a path through which the data passes is computing node 3.1→access switch 3→core switch 1→access switch 1-computing node 1.1, and specifically, the path passes through a fourth port 1 of the core switch 1; and
the computing node 3.2 sends data to the computing node 1.2, a path through which the data passes is computing node 3.2-access switch 3→core switch 2-access switch 1-computing node 1.2, and specifically, the path passes through a fourth port 1 of the core switch 2.

It is sequentially analyzed that the amount of data transmitted on each of the multiple inter-group paths after the exchange meets the preset condition.

Further, communication plans of S8, S7, S6, and S5 in allgather are respectively the same as communication plans of S1, S2, S3, and S4 in reduce-scatter. For example, in S7, the computing node 3.1 communicates with the computing node 3.5, and the computing node 3.2 communicates with the computing node 3.6; in S6, the computing node 1.1 communicates with the computing node 1.5, and the computing node 1.2 communicates with the computing node 2.3; and in S5, the computing node 1.3 communicates with the computing node 3.5, and the computing node 1.4 communicates with the computing node 3.6. Because the communication plans of S8, S7, S6, and S5 are respectively the same as the communication plans of S1, S2, S3, and S4, the communication plans of S8, S7, S6, and S5 are not shown in (c) of FIG. 9.

It should be noted that the management node further needs to determine data that needs to be transmitted between two computing nodes on each inter-group path. For example, with reference to the diagram of the communication relationship of the HD algorithm shown in (c) of FIG. 9, in S1, that the computing node 1.1 communicates with the computing node 1.3 specifically includes: The computing node 1.1 sends a half of intermediate data of the computing node 1.1 to the computing node 1.3. Correspondingly, the communication plan determined by the management node not only includes an intra-group path "computing node 1.1↔access switch↔ computing node 1.3", but also includes indication information (for example, a half of the intermediate data) of data to be sent by the computing node 1.1 to the computing node 1.3.

After determining the communication plan, the management node may further determine plan information according to the communication plan. The plan information includes path information respectively corresponding to the multiple inter-group paths, and the path information corresponding to the inter-group path indicates that the inter-group path is used to transmit data between two computing nodes on the inter-group path. Then, the management node separately sends the plan information to the N computing nodes. Each of the N computing nodes determines, based on the received plan information, a computing node to which data needs to be sent, and/or determines a computing node from which data needs to be received.

Specifically, this application may further include step 703 to step 705.

A first inter-group path in the multiple inter-group paths is used as an example for description. The first inter-group path includes a first computing node, a second computing node, and a first core switch. Optionally, the first inter-group path further includes a first access switch corresponding to a group to which the first computing node belongs and a second access switch corresponding to a group to which the second computing node belongs.

Step 703: The management node separately sends first information to the first computing node and the second computing node.

The plan information determined by the management node includes path information (denoted as the first information) corresponding to the first inter-group path, where the first information indicates that the first inter-group path is used to transmit data between the first computing node and the second computing node.

For example, the first information includes the first inter-group path, or includes the first computing node and the second computing node. The first information further includes indication information of data to be sent by the first computing node to the second computing node, and/or indication information of data to be sent by the second computing node to the first computing node.

In a specific implementation, the management node separately sends the plan information to the first computing node and the second computing node. Correspondingly, the first computing node and the second computing node separately receive the plan information from the management node, and obtain the first information from the plan information. In another specific implementation, the management node directly sends the first information to the first computing node and the second computing node. Correspondingly, the first computing node and the second computing node receive the first information from the management node.

Step 704: The first computing node determines, based on the first information, data (denoted as first data) to be sent to the second computing node, and sends the first data to the second computing node.

Correspondingly, the second computing node receives the data from the first computing node, and determines, based on the first information, that the received data is the first data from the first computing node. Then, the second computing node updates the first data locally.

Step 705: The second computing node determines, based on the first information, data (denoted as data 1) to be sent to the first computing node, and sends the data 1 to the first computing node.

Correspondingly, the first computing node receives the data from the second computing node, and determines, based on the first information, that the received data is the data 1 from the second computing node. Then, the first computing node updates the data 1 locally.

When the first computing node sends the data to the second computing node, specifically, the first computing node sends the first data to the first access switch, the first access switch sends the first data to the first core switch, the first core switch sends the first data to the second access switch, and the second access switch sends the first data to the second computing node.

It may be understood that, when sending the first data, the first computing node directly transmits the first data to the first access switch connected to the first computing node, and a first port and a second port of the first access switch are bound to each other. Therefore, after receiving the first data, the first access switch directly outputs the first data through the second port bound to the first port that receives the first data, and the first access switch further outputs the first data to a core switch connected to the second port. Similarly, the core switch and the second access switch also determine, based on an existing connection relationship or an internal binding relationship, to transmit the first data to the second computing node. In this way, the computing node, the core switch, and the access switch that are related to the inter-group path all transmit data based on the existing path, to ensure order of data transmission, and avoid traffic congestion of a port of the core switch in an inter-group communication process. The descriptions are also applicable to a case in which the second computing node sends the data 1 to the first computing node. Details are not described again.

Specifically, this application may further include step 706 to step 708.

A first intra-group path included in multiple intra-group paths is used as an example for description. The first intra-group path includes the first computing node, a third computing node, and a first access switch.

Step 706: The management node separately sends second information to the first computing node and the third computing node.

The plan information determined by the management node includes path information (denoted as the second information) corresponding to the first intra-group path, where the second information indicates that the first intra-group path is used to transmit data between the first computing node and the third computing node.

For example, the second information includes the first intra-group path, or includes the first computing node and the third computing node. The second information further includes indication information of data to be sent by the first computing node to the third computing node, and/or indication information of data to be sent by the third computing node to the first computing node.

In a specific implementation, the management node separately sends the plan information to the first computing node and the third computing node. Correspondingly, the first computing node and the third computing node separately receive the plan information from the management node, and obtain the second information from the plan information. In another specific implementation, the management node directly sends the second information to the first computing node and the third computing node separately. Correspondingly, the first computing node and the third computing node receive the second information from the management node.

Step 707: The first computing node determines, based on the second information, data (denoted as second data) to be sent to the third computing node, and sends the second data to the third computing node.

Correspondingly, the third computing node receives the data from the first computing node, determines, based on the second information, that the received data is the second data from the first computing node, and updates the second data locally.

Step 708: The third computing node determines, based on the second information, data (denoted as data 2) to be sent to the first computing node, and sends the data 2 to the first computing node.

Correspondingly, the first computing node receives the data from the third computing node, and determines, based on the second information, that the received data is the data 2 from the third computing node. Then, the first computing node updates the data 2 locally.

It should be noted that, when the first computing node sends the data to the third computing node, specifically, the first computing node sends the second data to an access switch (namely, the first access switch) to which the first computing node belongs. The first access switch is connected to the third computing node, and the first access switch sends the second data to the third computing node.

It may be understood that FIG. 7 is divided into a planning phase and a training phase. The planning phase includes step 701 to step 703 and step 706. The training phase includes step 704, step 705, step 707, and step 708. Step 704 and step 705 are steps of transmitting data between two computing nodes in different groups. Step 707 and step 708 are steps of transmitting data between two computing nodes in a same group.

It should be further noted that, when the management node is one of the N computing nodes, the management node separately sends the plan information to other (N-1) computing nodes. In this way, each of the N computing nodes determines, based on the plan information, a computing node to which data needs to be sent, and/or determines a computing node from which data needs to be received. For specific implementation, refer to step 703 to step 708.

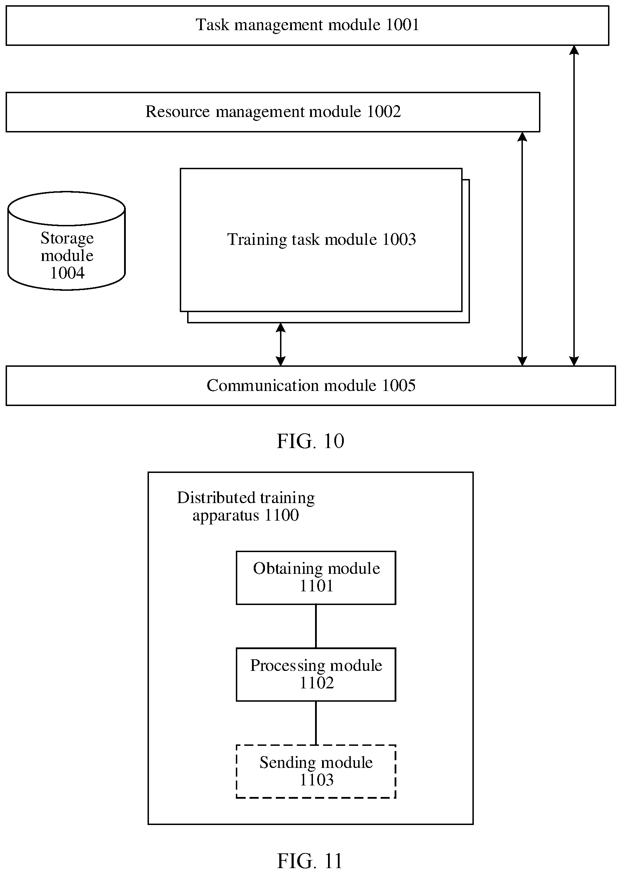

FIG. 10 is a diagram of an example of a structure of a management node according to this application. The management node includes a task management module 1001, a resource management module 1002, and a training task module 1003.

The task management module 1001 obtains a training task, and applies to the resource management module 1002 for a resource based on a communication algorithm and a total quantity N of computing nodes in the training task, that is, applies for a computing node used for distributed training. Specifically, the task management module 1001 sends a task resource application to the resource management module 1002, where the task resource application includes the communication algorithm and the total quantity N of computing nodes. For a function of the task management module 1001, refer to descriptions in step 801.

The resource management module 1002 receives the task resource application from the task management module 1001, and selects the N computing nodes used for distributed training from multiple computing nodes in an idle state in a computing cluster based on the communication algorithm and the total quantity N of computing nodes in the task resource application. For specific implementation, refer to the implementation in which the management node selects the N computing nodes from the multiple computing nodes in the idle state in the current computing cluster in step 802.

Optionally, the resource management module 1002 receives multiple task resource applications, where each task resource application includes a priority of a corresponding training task. The resource management module 1002 determines, based on priorities of the multiple training tasks, a training task for which a resource is first applied.

After selecting N computing nodes corresponding to the training task, the resource management module 1002 may return, to the task management module 1001, identifiers of the N computing nodes that are currently applied for. The task management module 1001 indicates the training task module 1003 to respectively start, in the N computing nodes, training tasks respectively corresponding to the N computing nodes.

The training task module 1003 may further obtain a network topology of the N computing nodes, or obtain a network topology of the computing cluster, and determine a communication plan between the N computing nodes based on the obtained network topology. For specific implementation, refer to descriptions of determining the communication plan by the management node in step 802. Further, the training task module 1003 determines plan information according to the communication plan, and separately sends the plan information to the N computing nodes.

It should be supplemented that a storage module 1004 shown in FIG. 10 is configured to store computer program instructions. When executing the computer program instructions in the storage module 1004, a module in the management node may perform an action corresponding to the module. A communication module 1005 shown in FIG. 10 is configured to perform communication between any two modules in the management node. For example, the task management module 1001 sends a task resource application to the resource management module 1002 by using the communication module 1005.

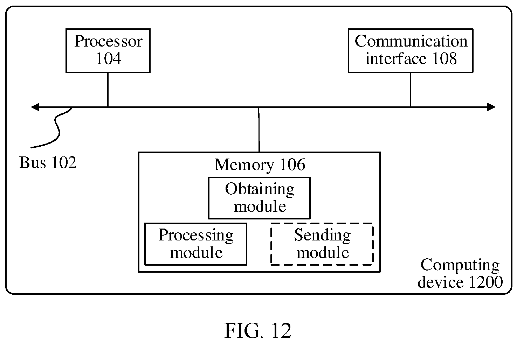

Based on the foregoing content and a same concept, FIG. 11 and FIG. 12 are diagrams of examples of structures of possible distributed training apparatuses according to this application. These distributed training apparatuses may be management nodes in the foregoing method embodiments, and are configured to implement functions of the management nodes in the foregoing method embodiments. Therefore, beneficial effects of the foregoing method embodiments can also be achieved.

As shown in FIG. 11, the distributed training apparatus 1100 includes an obtaining module 1101 and a processing module 1102.

Specifically, the obtaining module 1101 is configured to obtain a network topology, where the network topology includes a connection relationship between a core switch and a computing node in a computing cluster, the computing cluster includes M groups, and each group includes one or more computing nodes. The processing module 1102 is configured to determine a communication plan between N computing nodes based on the network topology, where the N computing nodes are computing nodes that are in the computing cluster and that are configured to train a target model in a distributed manner; the communication plan includes multiple inter-group paths, and for each of the multiple inter-group paths: the inter-group path includes two computing nodes that are in the N computing nodes and that belong to different groups, and a core switch configured to connect the two computing nodes, and the inter-group path is used to transmit data between the two computing nodes on the inter-group path; an amount of data transmitted on each of the multiple inter-group paths meets a preset condition; and both M and N are integers greater than 2.

In a possible implementation, when determining the communication plan between the N computing nodes based on the network topology, the processing module 1102 is specifically configured to determine the communication plan between the N computing nodes based on the network topology and a communication algorithm, where the communication algorithm is used to aggregate, in distributed training, data obtained by separately performing training by the N computing nodes, to obtain the target model.

In a possible implementation, the obtaining module 1101 is further configured to obtain a training task, where the training task includes a total quantity N of computing nodes and the communication algorithm. When determining the communication plan between the N computing nodes based on the network topology, the processing module 1102 is specifically configured to: determine the N computing nodes and the communication plan between the N computing nodes from multiple computing nodes in an idle state in the computing cluster based on the network topology, the total quantity N of computing nodes, and the communication algorithm.

In a possible implementation, when determining the N computing nodes and the communication plan between the N computing nodes from the multiple computing nodes in the idle state in the computing cluster based on the network topology, the total quantity N of computing nodes, and the communication algorithm, the processing module 1102 is specifically configured to: determine the N computing nodes from the multiple computing nodes in the idle state in the computing cluster based on the network topology and the total quantity N of computing nodes; pair two computing nodes that are in the N computing nodes and that belong to a same group, and when multiple unpaired computing nodes are left, pair the multiple unpaired computing nodes, to obtain N/2 node pairs; determine a communication plan between the N computing nodes in each of multiple rounds of communication based on the multiple rounds of communication of the communication algorithm and the N/2 node pairs, where for a communication plan in any round of communication, a larger amount of data transmitted between two computing nodes in the communication plan indicates a smaller quantity of inter-group paths included in the communication plan; and if it is determined that in an i^{th} round of communication in the multiple rounds of communication, the communication plan between the N computing nodes includes multiple inter-group paths, and an amount of data transmitted on each of the multiple inter-group paths does not meet the preset condition, adjust the communication plan between the N computing nodes in the i^{th} round of communication, where i is a positive integer.

In a possible implementation, the multiple inter-group paths include a first inter-group path, and the first inter-group path includes a first computing node, a second computing node, and a first core switch. The distributed training apparatus 1100 further includes a sending module 1103, and the sending module 1103 is configured to separately send first information to the first computing node and the second computing node, where the first information indicates that the first inter-group path is used by the first computing node to send first data to the second computing node.

In a possible implementation, multiple intra-group paths include a first intra-group path, and the first intra-group path includes the first computing node, a third computing node, and a first access switch. The distributed training apparatus 1100 further includes a sending module 1103, and the sending module 1103 is configured to separately send second information to the first computing node and the third computing node, where the second information indicates that the first intra-group path is used by the first computing node to send second data to the third computing node.

In a possible implementation, in the obtaining module 1101, the processing module 1102, and the sending module 1103, some functional modules may be deployed on the computing node of the computing cluster, and other remaining functional modules are deployed on an external node independent of the computing cluster. For example, the obtaining module 1101 and the sending module 1103 are deployed on the computing node of the computing cluster, and the processing module 1102 is deployed on the external node independent of the computing cluster. Alternatively, the obtaining module 1101 is deployed on the computing node of the computing cluster, and the processing module 1102 and the sending module 1103 are deployed on the external node independent of the computing cluster. Alternatively, another manner is used. Examples are not listed one by one in this application.

The obtaining module 1101, the processing module 1102, and the sending module 1103 may all be implemented by software, or may be implemented by hardware. The following uses the processing module 1102 as an example to describe an implementation of the processing module 1102. Similarly, for implementations of the obtaining module 1101 and the sending module 1103, refer to the implementation of the processing module 1102.

The module is used as an example of a software functional unit, and the processing module 1102 may include code run on a computing instance. The computing instance may include at least one of a physical host (computing device), a virtual machine, and a container. Further, there may be one or more computing instances. For example, the processing module 1102 may include code run on multiple hosts/virtual machines/containers.

It should be noted that the multiple hosts/virtual machines/containers configured to run the code may be distributed in a same region (region), or may be distributed in different regions. Further, the multiple hosts/virtual machines/containers configured to run the code may be distributed in a same availability zone (availability zone, AZ), or may be distributed in different AZs. Each AZ includes one data center or multiple data centers that are geographically close to each other. Generally, one region may include multiple AZs.

Similarly, the multiple hosts/virtual machines/containers configured to run the code may be distributed in a same virtual private cloud (virtual private cloud, VPC), or may be distributed in multiple VPCs. Generally, one VPC is set in one region. A communication gateway needs to be set in each VPC for communication between two VPCs in a same region or between VPCs in different regions, and interconnection between VPCs is implemented through the communication gateway.

The module is used as an example of a hardware functional unit, and the processing module 1102 may include at least one computing device, for example, a server. Alternatively, the processing module 1102 may be a device implemented by using an application-specific integrated circuit (application-specific integrated circuit, ASIC) or a programmable logic device (programmable logic device, PLD), or the like. The PLD may be implemented by a complex programmable logic device (complex programmable logic device, CPLD), a field programmable gate array (field programmable gate array, FPGA), generic array logic (generic array logic, GAL), or any combination thereof.

The multiple computing devices included in the processing module 1102 may be distributed in a same region, or may be distributed in different regions. The multiple computing devices included in the processing module 1102 may be distributed in a same AZ, or may be distributed in different AZs. Similarly, the multiple computing devices included in the processing module 1102 may be distributed in a same VPC, or may be distributed in multiple VPCs. The multiple computing devices may be any combination of computing devices such as the server, the ASIC, the PLD, the CPLD, the FPGA, and the GAL.

It should be noted that, in another embodiment, the processing module 1102 may be configured to perform any step in the method in FIG. 7 or FIG. 8, the obtaining module 1101 may be configured to perform any step in the method in FIG. 7 or FIG. 8, and the sending module 1103 may be configured to perform any step in the method in FIG. 7 or FIG. 8. Steps implemented by the processing module 1102, the obtaining module 1101, and the sending module 1103 may be specified based on a requirement. The processing module 1102, the obtaining module 1101, and the sending module 1103 respectively implement different steps in the method in FIG. 7 or FIG. 8, to implement all functions of the distributed training apparatus 1100.

Alternatively, it may be understood that functions of the obtaining module 1101 and the sending module 1103 are included in functions of the communication module 1005 shown in FIG. 10. In other words, the communication module 1005 has the functions of the obtaining module 1101 and the sending module 1103. The processing module 1102 has functions of the task management module 1001, the resource management module 1002, and the training task module 1003 shown in FIG. 10. Mutual reference may be made between FIG. 10 and FIG. 11. Correspondingly, some functional modules in the task management module 1001, the resource management module 1002, the training task module 1003, the storage module 1004, and the communication module 1005 are deployed in the computing node of the computing cluster. Other remaining functional modules are deployed on the external node independent of the computing cluster.

FIG. 12 shows a distributed training apparatus 1200 according to an embodiment of this application. The distributed training apparatus shown in FIG. 12 may be an implementation of a hardware circuit of the apparatus shown in FIG. 11. The apparatus is applicable to the flowchart shown above, and performs a function of the management node in the foregoing method embodiments.

For ease of description, FIG. 12 shows only main components of the distributed training apparatus 1200.

This application further provides a distributed training apparatus 1200. As shown in FIG. 12, the distributed training apparatus 1200 includes a bus 102, a processor 104, a memory 106, and a communication interface 108. The processor 104, the memory 106, and the communication interface 108 communicate with each other through the bus 102. The distributed training apparatus 1200 may be a server or a terminal device. It should be understood that quantities of processors and memories in the distributed training apparatus 1200 are not limited in this application.

The bus 102 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one line is used in FIG. 12 for representation, but it does not indicate that there is only one bus or only one type of bus. The bus 102 may include a path for transmitting information between various components (for example, the memory 106, the processor 104, the communication interface 108) of the distributed training apparatus 1200.

The processor 104 may include any one or more of processors, such as a central processing unit (central processing unit, CPU), a graphics processing unit (graphics processing unit, GPU), a microprocessor (microprocessor, MP), or a digital signal processor (digital signal processor, DSP).

The memory 106 may include a volatile memory (volatile memory), for example, a random access memory (random access memory, RAM). The processor 104 may further include a non-volatile memory (non-volatile memory), for example, a read-only memory (read-only memory, ROM), a flash memory, a hard disk drive (hard disk drive, HDD), or a solid-state drive (solid-state drive, SSD).

The memory 106 stores executable program code, and the processor 104 executes the executable program code to separately implement the function of the obtaining module 1101, the processing module 1102, or the sending module 1103, to implement a distributed training method. In other words, the memory 106 stores instructions used for performing the foregoing distributed training method.

The communication interface 108 implements communication between the distributed training apparatus 1200 and another device or a communication network by using a transceiver module, for example, but not limited to a network interface card or a transceiver.

Alternatively, it may be understood that the memory 106 has a function of the storage module 1004 shown in FIG. 10, the processor 104 has the functions of the task management module 1001, the resource management module 1002, and the training task module 1003 shown in FIG. 10, and the bus 102 and the communication interface 108 have the functions of the communication module 1005 shown in FIG. 10. FIG. 10, FIG. 11, and FIG. 12 may be mutually referenced.

Based on the foregoing content and a same concept, an embodiment of this application further provides a computer-readable storage medium. The computer-readable storage medium may be any usable medium that can be stored by a computing device, or a data storage device such as a data center that includes one or more usable media. The usable medium may be a magnetic medium (for example, a floppy disk, a hard disk drive, or a magnetic tape), an optical medium (for example, a DVD), a semiconductor medium (for example, a solid-state drive), or the like. The computer-readable storage medium includes instructions, and the instructions instruct the computing device to perform the method in the embodiment related to FIG. 7 or FIG. 8.

Based on the foregoing content and a same concept, an embodiment of this application provides a computer program product. When a computing device reads and executes the computer program product, the computing device implements the method in the embodiment related to FIG. 7 or FIG. 8.

It may be understood that various numbers in embodiments of this application are merely used for differentiation for ease of description, and are not used to limit the scope of embodiments of this application. Sequence numbers of the foregoing processes do not mean execution sequences. The execution sequences of the processes should be determined based on functions and internal logic of the processes.

It is clear that a person skilled in the art can make various modifications and variations to this application without departing from the protection scope of this application. Therefore, this application is intended to cover these modifications and variations of this application provided that they fall within the scope of the claims of this application and their equivalent technologies.

## Claims

1. A distributed training method, comprising:
obtaining a network topology, wherein the network topology comprises a connection relationship between a core switch and a computing node in a computing cluster, the computing cluster comprises M groups, and each group comprises one or more computing nodes; and
determining a communication plan between N computing nodes based on the network topology, wherein
the N computing nodes are computing nodes that are in the computing cluster and that are configured to train a target model in a distributed manner;
the communication plan comprises multiple inter-group paths, and for each of the multiple inter-group paths: the inter-group path comprises two computing nodes that are in the N computing nodes and that belong to different groups, and a core switch configured to connect the two computing nodes, and the inter-group path is used to transmit data between the two computing nodes on the inter-group path;
an amount of data transmitted on each of the multiple inter-group paths meets a preset condition; and
both M and N are integers greater than 2.

2. The method according to claim 1, wherein the determining a communication plan between N computing nodes based on the network topology comprises:
determining the communication plan between the N computing nodes based on the network topology and a communication algorithm, wherein
the communication algorithm is used to aggregate, in distributed training, data obtained by separately performing training by the N computing nodes, to obtain the target model.

3. The method according to claim 1 or 2, wherein each of multiple core switches comprised in the multiple inter-group paths comprises one or more traffic ports; and
that an amount of data transmitted on each of the multiple inter-group paths meets a preset condition comprises:
a difference between traffic of any two of multiple traffic ports comprised in the multiple inter-group paths is less than a threshold, wherein traffic of a traffic port is associated with a data amount of data transmitted between two computing nodes on an inter-group path to which the traffic port belongs.

4. The method according to claim 3, wherein when each inter-group path comprises multiple levels of core switches, core switches to which any two traffic ports whose difference is less than the threshold belong to a same level.

5. The method according to any one of claims 1 to 4, wherein
for any two of the multiple inter-group paths:
the two inter-group paths comprise different core switches, or the two inter-group paths comprise a same core switch, and traffic ports of the core switch on the two inter-group paths are different.

6. The method according to any one of claims 1 to 5, wherein the network topology comprises a connection relationship between the core switch, the computing node in the computing cluster, and an access switch; and
for each of the multiple inter-group paths:
the inter-group path further comprises two access switches respectively corresponding to the two computing nodes, and each computing node on the inter-group path is connected to the core switch by using the access switch corresponding to the computing node.

7. The method according to claim 6, wherein the communication plan further comprises multiple intra-group paths, each intra-group path comprises two computing nodes that are in the N computing nodes and that belong to a same group, and an access switch corresponding to the group, and the intra-group path is used to transmit data between the two computing nodes on the intra-group path.

8. The method according to claim 7, wherein a data amount of the data transmitted between the two computing nodes on the intra-group path is greater than the data amount of the data transmitted between the two computing nodes on the inter-group path.

9. The method according to any one of claims 1 to 8, wherein the M groups respectively correspond to M access switches; and
for each of the M access switches:
the access switch comprises K first ports and K second ports respectively corresponding to the K first ports;
the K first ports are respectively connected to K core switches;
the K second ports are respectively connected to K ports of a computing node in a group corresponding to the access switch; and
K is an integer greater than 2.

10. The method according to any one of claims 1 to 9, wherein the determining a communication plan between N computing nodes based on the network topology comprises:
obtaining a training task, wherein the training task comprises a total quantity N of computing nodes and the communication algorithm; and
determining the N computing nodes and the communication plan between the N computing nodes from multiple computing nodes in an idle state in the computing cluster based on the network topology, the total quantity N of computing nodes, and the communication algorithm.

11. The method according to claim 10, wherein the determining the N computing nodes and the communication plan between the N computing nodes from multiple computing nodes in an idle state in the computing cluster based on the network topology, the total quantity N of computing nodes, and the communication algorithm comprises:
determining the N computing nodes from the multiple computing nodes in the idle state in the computing cluster based on the network topology and the total quantity N of computing nodes;
pairing two computing nodes that are in the N computing nodes and that belong to a same group, and when multiple unpaired computing nodes are left, pairing the multiple unpaired computing nodes, to obtain N/2 node pairs;
determining a communication plan between the N computing nodes in each of multiple rounds of communication based on the multiple rounds of communication of the communication algorithm and the N/2 node pairs, wherein for a communication plan in any round of communication, a larger amount of data transmitted between two computing nodes in the communication plan indicates a smaller quantity of inter-group paths comprised in the communication plan; and
if it is determined that in an i^{th} round of communication in the multiple rounds of communication, the communication plan between the N computing nodes comprises multiple inter-group paths, and an amount of data transmitted on each of the multiple inter-group paths does not meet the preset condition, adjusting the communication plan between the N computing nodes in the i^{th} round of communication, wherein i is a positive integer.

12. The method according to any one of claims 1 to 11, wherein the multiple inter-group paths comprise a first inter-group path, and the first inter-group path comprises a first computing node, a second computing node, and a first core switch; and
after the determining a communication plan between N computing nodes based on the network topology, the method further comprises:
separately sending first information to the first computing node and the second computing node according to the communication plan, wherein
the first information indicates that the first inter-group path is used by the first computing node to send first data to the second computing node.

13. The method according to any one of claims 7 to 12, wherein the multiple intra-group paths comprise a first intra-group path, and the first intra-group path comprises the first computing node, a third computing node, and a first access switch; and
after the determining a communication plan between N computing nodes based on the network topology, the method further comprises:
separately sending second information to the first computing node and the third computing node according to the communication plan, wherein
the second information indicates that the first intra-group path is used by the first computing node to send second data to the third computing node.

14. A distributed training system, comprising:
a management node, K core switches, and a computing cluster, wherein the computing cluster comprises M groups, and each group comprises one or more computing nodes, wherein
the K core switches are configured to connect computing nodes in different groups in the M groups; and
the management node is configured to: obtain a network topology, and determine a communication plan between N computing nodes based on the network topology, wherein the network topology comprises a connection relationship between the K core switches and the computing node in the computing cluster, and the N computing nodes are computing nodes that are in the computing cluster and that are configured to train a target model in a distributed manner;
the communication plan comprises multiple inter-group paths, and for each of the multiple inter-group paths: the inter-group path comprises two computing nodes that are in the N computing nodes and that belong to different groups, and the core switch that is in the K core switches and that is configured to connect the two computing nodes, and the inter-group path is used to transmit data between the two computing nodes on the inter-group path;
an amount of data transmitted on each of the multiple inter-group paths meets a preset condition; and
K, M, and N are all integers greater than 2.

15. The system according to claim 14, wherein when determining the communication plan between the N computing nodes based on the network topology, the management node is specifically configured to:
determine the communication plan between the N computing nodes based on the network topology and a communication algorithm, wherein
the communication algorithm is used to aggregate, in distributed training, data obtained by separately performing training by the N computing nodes, to obtain the target model.

16. The system according to claim 14 or 15, wherein each of multiple core switches comprised in the multiple inter-group paths comprises one or more traffic ports; and
that an amount of data transmitted on each of the multiple inter-group paths meets a preset condition comprises:
a difference between traffic of any two of multiple traffic ports comprised in the multiple inter-group paths is less than a threshold, wherein traffic of a traffic port is associated with a data amount of data transmitted between two computing nodes on an inter-group path to which the traffic port belongs.

17. The system according to any one of claims 14 to 16, further comprising M access switches respectively corresponding to the M groups, wherein any one of the M access switches is configured to connect a computing node in a group corresponding to the access switch to the K core switches;
the network topology comprises a connection relationship between the K core switches, the M access switches, and the computing node in the computing cluster; and
for each of the multiple inter-group paths, the inter-group path further comprises two access switches respectively corresponding to the groups to which the two computing nodes belong.

18. The system according to claim 17, wherein
the communication plan further comprises multiple intra-group paths, each intra-group path comprises two computing nodes that are in the N computing nodes and that belong to a same group, and an access switch that is in the M access switches and that corresponds to the group, and the intra-group path is used to transmit data between the two computing nodes on the intra-group path.

19. The system according to any one of claims 14 to 18, wherein the multiple inter-group paths comprise a first inter-group path, and the first inter-group path comprises a first computing node, a second computing node, and a first core switch;
the management node is further configured to separately send first information to the first computing node and the second computing node according to the communication plan, wherein the first information indicates that the first inter-group path is used by the first computing node to send first data to the second computing node;
the first computing node is configured to send the first data to the first core switch based on the first information;
the first core switch is configured to forward the first data to the second computing node; and
the second computing node is configured to receive the first data from the first core switch based on the first information.

20. The system according to claim 19, wherein the first inter-group path further comprises a first access switch corresponding to the first node and a second access switch corresponding to the second node;
the first computing node is specifically configured to send the first data to the first access switch based on the first information, to enable the first access switch to send the first data to the first core switch; and
the second computing node is specifically configured to receive, based on the first information, the first data that is from the first core switch and that is forwarded by the second access switch.

21. The system according to any one of claims 18 to 20, wherein the multiple intra-group paths comprise a first intra-group path, and the first intra-group path comprises the first computing node, a third computing node, and a first access switch;
the management node is further configured to separately send second information to the first computing node and the third computing node according to the communication plan, wherein the second information indicates that the first intra-group path is used by the first computing node to send second data to the third computing node;
the first computing node is configured to send the second data to the first access switch based on the second information;
the first access switch is configured to forward the second data to the third computing node; and
the third computing node is configured to receive the second data from the first access switch based on the first information.

22. A distributed training apparatus, comprising:
an obtaining module, configured to obtain a network topology, wherein the network topology comprises a connection relationship between a core switch and a computing node in a computing cluster, the computing cluster comprises M groups, and each group comprises one or more computing nodes; and
a processing module, configured to determine a communication plan between N computing nodes based on the network topology, wherein
the N computing nodes are computing nodes that are in the computing cluster and that are configured to train a target model in a distributed manner;
the communication plan comprises multiple inter-group paths, and for each of the multiple inter-group paths: the inter-group path comprises two computing nodes that are in the N computing nodes and that belong to different groups, and a core switch configured to connect the two computing nodes, and the inter-group path is used to transmit data between the two computing nodes on the inter-group path;
an amount of data transmitted on each of the multiple inter-group paths meets a preset condition; and
both M and N are integers greater than 2.

23. The apparatus according to claim 22, wherein when determining the communication plan between the N computing nodes based on the network topology, the processing module is specifically configured to:
determine the communication plan between the N computing nodes based on the network topology and a communication algorithm, wherein
the communication algorithm is used to aggregate, in distributed training, data obtained by separately performing training by the N computing nodes, to obtain the target model.

24. The apparatus according to claim 22 or 23, wherein each of multiple core switches comprised in the multiple inter-group paths comprises one or more traffic ports; and
that an amount of data transmitted on each of the multiple inter-group paths meets a preset condition comprises:
a difference between traffic of any two of multiple traffic ports comprised in the multiple inter-group paths is less than a threshold, wherein traffic of a traffic port is associated with a data amount of data transmitted between two computing nodes on an inter-group path to which the traffic port belongs.

25. The apparatus according to claim 24, wherein when each inter-group path comprises multiple levels of core switches, core switches to which any two traffic ports whose difference is less than the threshold belong to a same level.

26. The apparatus according to any one of claims 22 to 25, wherein
for any two of the multiple inter-group paths:
the two inter-group paths comprise different core switches, or the two inter-group paths comprise a same core switch, and traffic ports of the core switch on the two inter-group paths are different.

27. The apparatus according to any one of claims 22 to 26, wherein the network topology comprises a connection relationship between the core switch, the computing cluster, and an access switch; and
for each of the multiple inter-group paths:
the inter-group path further comprises two access switches respectively corresponding to the two computing nodes, and each computing node on the inter-group path is connected to the core switch by using the access switch corresponding to the computing node.

28. The apparatus according to claim 27, wherein the communication plan further comprises multiple intra-group paths, each intra-group path comprises two computing nodes that are in the N computing nodes and that belong to a same group, and an access switch corresponding to the group, and the intra-group path is used to transmit data between the two computing nodes on the intra-group path.

29. The apparatus according to claim 28, wherein a data amount of the data transmitted between the two computing nodes on the intra-group path is greater than the data amount of the data transmitted between the two computing nodes on the inter-group path.

30. The apparatus according to any one of claims 22 to 29, wherein the M groups respectively correspond to M access switches; and
for each of the M access switches:
the access switch comprises K first ports and K second ports respectively corresponding to the K first ports;
the K first ports are respectively connected to K core switches;
the K second ports are respectively connected to K ports of a computing node in a group corresponding to the access switch; and
K is an integer greater than 2.

31. The apparatus according to any one of claims 22 to 30, wherein the obtaining module is further configured to obtain a training task, wherein the training task comprises a total quantity N of computing nodes and the communication algorithm; and
when determining the communication plan between the N computing nodes based on the network topology, the processing module is specifically configured to determine the N computing nodes and the communication plan between the N computing nodes from multiple computing nodes in an idle state in the computing cluster based on the network topology, the total quantity N of computing nodes, and the communication algorithm.

32. The apparatus according to claim 31, wherein when determining the N computing nodes and the communication plan between the N computing nodes from the multiple computing nodes in the idle state in the computing cluster based on the network topology, the total quantity N of computing nodes, and the communication algorithm, the processing module is specifically configured to:
determine the N computing nodes from the multiple computing nodes in the idle state in the computing cluster based on the network topology and the total quantity N of computing nodes;
pair two computing nodes that are in the N computing nodes and that belong to a same group, and when multiple unpaired computing nodes are left, pair the multiple unpaired computing nodes, to obtain N/2 node pairs;
determine a communication plan between the N computing nodes in each of multiple rounds of communication based on the multiple rounds of communication of the communication algorithm and the N/2 node pairs, wherein for a communication plan in any round of communication, a larger amount of data transmitted between two computing nodes in the communication plan indicates a smaller quantity of inter-group paths comprised in the communication plan; and
if it is determined that in an i^{th} round of communication in the multiple rounds of communication, the communication plan between the N computing nodes comprises multiple inter-group paths, and an amount of data transmitted on each of the multiple inter-group paths does not meet the preset condition, adjust the communication plan between the N computing nodes in the i^{th} round of communication, wherein i is a positive integer.

33. The apparatus according to any one of claims 22 to 32, wherein the multiple inter-group paths comprise a first inter-group path, and the first inter-group path comprises a first computing node, a second computing node, and a first core switch; and
the apparatus further comprises a sending module, wherein
the sending module is configured to separately send first information to the first computing node and the second computing node, wherein
the first information indicates that the first inter-group path is used by the first computing node to send first data to the second computing node.

34. The apparatus according to any one of claims 28 to 33, wherein the multiple intra-group paths comprise a first intra-group path, and the first intra-group path comprises the first computing node, a third computing node, and a first access switch; and
the apparatus further comprises a sending module, wherein
the sending module is configured to separately send second information to the first computing node and the third computing node, wherein
the second information indicates that the first intra-group path is used by the first computing node to send second data to the third computing node.

35. A computing device, comprising a processor, wherein the processor is connected to a memory, the memory is configured to store a computer program, and the processor is configured to execute the computer program stored in the memory, to enable the computing device to perform the method according to any one of claims 1 to 13.

36. A computer-readable storage medium, wherein the computer-readable storage medium stores a computer program or instructions, and when the computer program or the instructions are executed by a computing device, the method according to any one of claims 1 to 13 is implemented.
